# EUROPEAN PATENT APPLICATION

(11) **EP 4 333 477 A1**
(43) Date of publication of application: **06.03.2024**
(21) Application number: 22815051.2
(22) Date of filing: 20.05.2022
(51) Int. Cl.: H04W 8/14

(54) **COMMUNICATION METHOD AND COMMUNICATION APPARATUS**

(30) Priority: 31.05.2021 CN 202110597338
(71) Applicant: Huawei Technologies Co., Ltd., Longgang Shenzhen, Guangdong 518129 (CN)
(72) Inventor: CHEN, Zehao, Shenzhen, Guangdong 518129 (CN); LI, Yongcui, Shenzhen, Guangdong 518129 (CN); NI, Hui, Shenzhen, Guangdong 518129 (CN)
(74) Representative: MERH-IP Matias Erny Reichl Hoffmann Patentanwälte PartG mbB
(86) International application number: PCT/CN2022/094010
(87) International publication number: WO 2022/253004

(57) **Abstract**

This application provides a communication method and apparatus. In the method, each URSP rule included in a URSP corresponds to an HPLMN or a VPLMN of a UE. When the UE accesses an application, based on existing URSP rule matching, the UE uses PLMN information in the URSP rule as one of criteria for the UE to match a URSP rule, so that the UE can match the same application to different URSP rules in different PLMNs.

## Description

This application claims priority to Chinese Patent Application No. 202110597338.X, filed with the China National Intellectual Property Administration on May 31, 2021 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

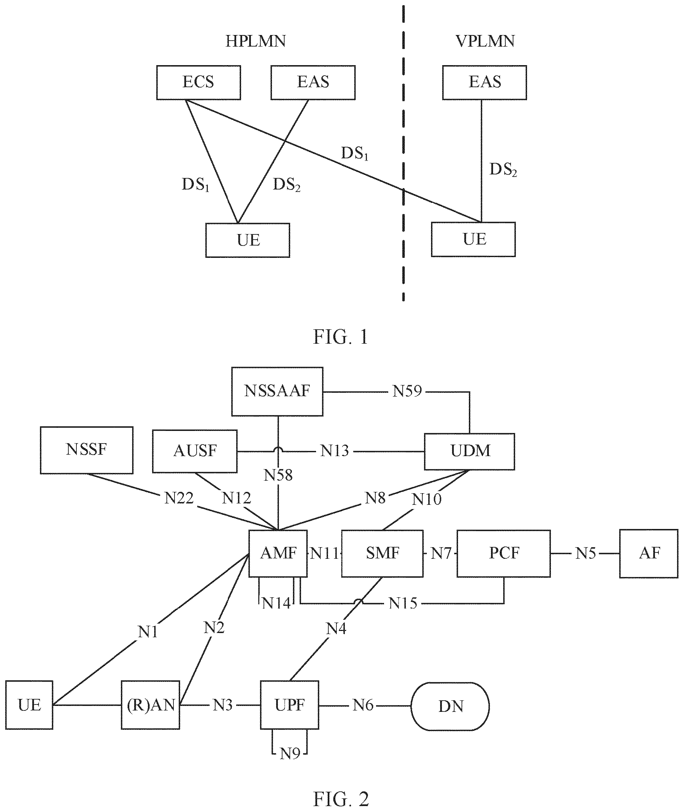

As shown in FIG. 1, an edge configuration server (edge configuration server, ECS) is deployed in a home public land mobile network (home public land mobile network, HPLMN), and an edge application server (edge application server, EAS) providing a same service is deployed in both the HPLMN and a visited public land mobile network (visited PLMN, VPLMN).

In this scenario, it is assumed that in a LTE route selection policy (UE route selection policy, URSP) of user equipment (user equipment, UE), the ECS corresponds to a data network name (data network name, DNN)₁ and single network slice selection assistance information (single network slice selection assistance information, S-NSSAI)₁. For ease of description, (DNN, S-NSSAI)₁ is referred to as DS₁ for short herein. Similarly, it is assumed that the EAS corresponds to (DNN, S-NSSAI)₂. For ease of description, (DNN, S-NSSAI)₂ is referred to as DS₂ for short herein. It should be noted that DS₁ and DS₂ may be the same or different.

It is assumed that the UE has the following requirements in both the HPLMN and the VPLMN: (1) accessing the ECS; (2) discovering, through the ECS, the EAS that provides the service; and (3) accessing the EAS that provides the service. The way to meet the foregoing requirements is that in both the HPLMN and the VPLMN, the UE can access the ECS and the EAS by using a specific session. As shown in FIG. 1, when the UE is located in the HPLMN, the UE accesses the ECS and the EAS deployed in the HPLMN. When the UE is located in the VPLMN, because no ECS is deployed in the VPLMN, the UE accesses the ECS deployed in the HPLMN. In addition, to shorten a user plane path and reduce a service delay, the UE accesses the EAS deployed in the VPLMN.

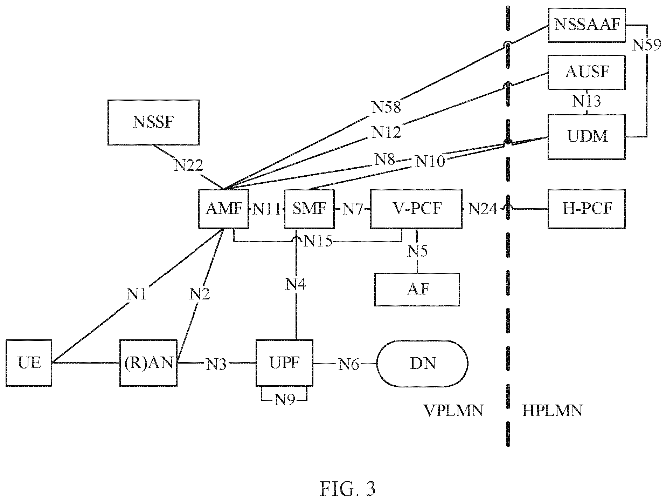

Based on the deployment scenario in FIG. 1 and the LTE requirements, the following two access requirements need to be met in this application:
Requirement 1: When the UE accesses the HPLMN, an assumed scenario in this application is that the UE needs to access the ECS and the EAS by using a same session. An advantage is that a session establishment process can be avoided. In other words, a prerequisite for meeting the requirement 1 is that DS₁ and DS₂ are the same.
Requirement 2: When the UE accesses the VPLMN, an assumed scenario in this application is that the UE needs to access the ECS by using a home routed (home routed, HR) roaming session, and access the EAS by using a local breakout (local breakout, LBO) roaming session. Reasonability of this scenario lies in that the ECS deployed in the HPLMN may only allow access of a user plane function (user plane function, UPF) in the HPLMN. Therefore, the UE that accesses the VPLMN needs to access the ECS deployed in the HPLMN via the UPF in the HPLMN. This access manner is met only by HR roaming shown in FIG. 3. When the UE is located in the VPLMN, to shorten a user plane path, the UE needs to access the local EAS via a UPF in the VPLMN. This access manner is met only by LBO roaming shown in FIG. 2. Therefore, if the UE needs to access, by using an HR session, the ECS deployed in the HPLMN, and simultaneously use the LBO session to access the local EAS, to meet the requirement 2, DS₁ and DS₂ need to be different, because in an existing session establishment mechanism, selection of a roaming manner (LBO or HR) is related to (DNN, S-NSSAI) of a session.

However, in existing standards, the foregoing requirement 1 and requirement 2 cannot be met at the same time.

### SUMMARY

This application provides a communication method and apparatus, to meet the foregoing requirement 1 and requirement 2.

According to a first aspect, a communication method is provided. The method includes: A terminal device determines a first UE route selection policy URSP, where the first URSP includes at least one first URSP rule, the first URSP rule corresponds to a home public land mobile network HPLMN or a visited public land mobile network VPLMN of the terminal device, and the first URSP is used to determine whether a first application is capable of associating with an existing session. The terminal device starts the first application. The terminal device determines, based on a serving PLMN and the first application, one of the at least one first URSP rule as a second URSP rule, where a PLMN corresponding to the second URSP rule is the same as the serving PLMN. The terminal device determines, according to the second URSP rule, to use the existing session or a newly established session to transmit a service of the first application.

In the foregoing technical solution, different PLMN information is added to each URSP rule, and is used as one of criteria for a UE to match a URSP rule, so that the UE matches a same service to different URSP rules in different PLMNs. In this way, the requirement 1 and the requirement 2 can be met at the same time.

With reference to the first aspect, in some implementations of the first aspect, the first URSP rule includes a PLMN descriptor, and the PLMN descriptor indicates information about a PLMN corresponding to the first URSP rule.

In the foregoing technical solution, a component "PLMN descriptor" is added to each URSP rule, and is used as one of the criteria for the UE to match the URSP rule, so that the UE matches the same service to different URSP rules in different PLMNs. In this way, the requirement 1 and the requirement 2 can be met at the same time.

With reference to the first aspect, in some implementations of the first aspect, that a terminal device determines a first URSP includes: The terminal device receives the first URSP from a policy control network element; or the terminal device configures the first URSP locally.

According to a second aspect, a communication method is provided. The method includes: A policy control network element sends a first UE route selection policy URSP to a terminal device, where the first URSP includes at least one first URSP rule, the first URSP rule corresponds to a home public land mobile network HPLMN or a visited public land mobile network VPLMN of the terminal device, and the first URSP is used to determine whether a first application is capable of associating with an existing session.

In the foregoing technical solution, different PLMN information is added to each URSP rule, and is used as one of criteria for a UE to match a URSP rule, so that the UE matches a same service to different URSP rules in different PLMNs. In this way, the requirement 1 and the requirement 2 can be met at the same time.

With reference to the second aspect, in some implementations of the second aspect, the first URSP rule includes a PLMN descriptor, and the PLMN descriptor indicates information about a PLMN corresponding to the first URSP rule.

In the foregoing technical solution, a component "PLMN descriptor" is added to each URSP rule, and is used as one of the criteria for the UE to match the URSP rule, so that the UE matches the same service to different URSP rules in different PLMNs. In this way, the requirement 1 and the requirement 2 can be met at the same time.

According to a third aspect, a communication method is provided. The method includes: A terminal device receives a first UE route selection policy URSP from a network device, where the first URSP includes at least one URSP rule, the first URSP is a URSP corresponding to a serving public land mobile network PLMN of the terminal device, the serving PLMN is a visited public land mobile network VPLMN, and the first URSP is used to determine whether a first application is capable of associating with an existing session. The terminal device starts the first application. The terminal device determines one of the at least one URSP rule as a first URSP rule based on the serving PLMN and the first application. The terminal device determines, according to the first URSP rule, to use the existing session or a newly established session to transmit a service of the first application.

In the foregoing technical solution, different URSPs are used when a UE accesses the VPLMN and the HPLMN, that is, the network device delivers a URSP to the UE at a PLMN granularity, so as to meet the requirement 1 and the requirement 2.

With reference to the third aspect, in some implementations of the third aspect, the method further includes: The terminal device receives first indication information from the network device, where the first indication information indicates that the first URSP corresponds to the VPLMN.

With reference to the third aspect, in some implementations of the third aspect, the network device is any one of a home policy control network element, a visited policy control network element, or an edge configuration server ECS.

With reference to the third aspect, in some implementations of the third aspect, the network device is an ECS, and before a terminal device receives a first URSP from a network device, the method further includes: The terminal device sends an identifier of the serving PLMN and first information to the network device, where the first information includes an identifier of an HPLMN of the terminal device and/or second indication information, and the second indication information indicates that the terminal device is in a roaming state.

According to a fourth aspect, a communication method is provided. The method includes: A network device determines a first UE route selection policy URSP, where the first URSP includes at least one URSP rule, the first URSP is a URSP corresponding to a serving public land mobile network PLMN of a terminal device, the serving PLMN is a visited public land mobile network VPLMN, and the first URSP is used to determine whether a first application is capable of associating with an existing session. The network device sends the first URSP to the terminal device.

In the foregoing technical solution, different URSPs are used when a UE accesses the VPLMN and the HPLMN, that is, the network device delivers a URSP to the UE at a PLMN granularity, so as to meet the requirement 1 and the requirement 2.

With reference to the fourth aspect, in some implementations of the fourth aspect, the method further includes: The network device sends first indication information to the terminal device, where the first indication information indicates that the first URSP corresponds to the VPLMN.

With reference to the fourth aspect, in some implementations of the fourth aspect, the network device is an edge configuration server ECS, and before the network device sends the first URSP to the terminal device, the method further includes: The network device receives an identifier of the serving PLMN and first information from the terminal device, where the first information includes an identifier of a home public land mobile network HPLMN of the terminal device and/or second indication information, and the second indication information indicates that the terminal device is in a roaming state. The network device determines, based on the identifier of the serving PLMN and the identifier of the HPLMN, that the terminal device is in the roaming state, or determines, based on the second indication information, that the terminal device is in the roaming state.

With reference to the fourth aspect, in some implementations of the fourth aspect, that a network device determines a first URSP includes: The network device sends second information to a home policy control network element, where the second information includes the identifier of the serving PLMN and a first request message, and the first request message is used to request the home policy control network element to send the first URSP to the network device. The network device receives the first URSP from the home policy control network element.

With reference to the fourth aspect, in some implementations of the fourth aspect, the network device is a visited policy control network element, and that a network device determines a first URSP includes: The network device receives third indication information from a home policy control network element, where the third indication information indicates the network device to send the first URSP to the terminal device. The network device determines the first URSP based on the third indication information.

With reference to the fourth aspect, in some implementations of the fourth aspect, the network device is a home policy control network element.

According to a fifth aspect, a communication method is provided. The method includes: A home policy control network element sends third indication information to a network device, where the third indication information indicates the network device to send a first URSP to a terminal device, the first URSP is a UE route selection policy URSP corresponding to a serving PLMN of the terminal device, the serving PLMN is a visited public land mobile network VPLMN, and the network device is a visited policy control network element.

In the foregoing technical solution, different URSPs are used when a UE accesses the VPLMN and the HPLMN, that is, the network device delivers a URSP to the UE at a PLMN granularity, so as to meet the requirement 1 and the requirement 2.

According to a sixth aspect, a communication method is provided. The method includes: A home policy control network element receives second information from a network device, where the second information includes an identifier of a serving public land mobile network PLMN of a terminal device and a first request message, the first request message is used to request the home policy control network element to send a first UE route selection policy URSP to the network device, the first URSP is a URSP corresponding to the serving PLMN of the terminal device, the serving PLMN is a visited public land mobile network VPLMN, and the network device is an edge configuration server ECS. The home policy control network element determines the first URSP based on the identifier of the serving PLMN. The home policy control network element sends the first URSP to the network device.

In the foregoing technical solution, different URSPs are used when a UE accesses the VPLMN and the HPLMN, that is, the network device delivers a URSP to the UE at a PLMN granularity, so as to meet the requirement 1 and the requirement 2.

According to a seventh aspect, a communication method is provided. The method includes: A terminal device obtains a first UE route selection policy URSP, where the first URSP includes a first URSP rule and a second URSP rule, the first URSP rule includes a first parameter combination, the first parameter combination is a data network name DNN and single network slice selection assistance information S-NSSAI that are matched when the terminal device accesses a first application, the second URSP rule includes a second parameter combination, the second parameter combination is a DNN and S-NSSAI that are matched when the terminal device accesses a second application, and the first parameter combination is different from the second parameter combination. The terminal device receives first indication information from a policy control network element, where the first indication information indicates that when a serving public land mobile network PLMN of the terminal device is a home public land mobile network HPLMN, the first parameter combination and the second parameter combination are considered as a same parameter combination. The terminal device starts the first application. The terminal device determines, according to the first URSP rule, to use a first session to transmit a service of the first application, where the first session corresponds to the first parameter combination. The terminal device starts the second application. The terminal device determines that the serving PLMN of the terminal device is the HPLMN. Terminal device determines, according to the second URSP rule and the first indication information, that the terminal device is successfully matched with the first session. The terminal device reuses the first session to transmit a service of the second application.

In the foregoing technical solution, a PCF sends the first indication information to a LTE, to indicate that when the UE accesses the HPLMN, the first parameter combination corresponding to the first application (for example, an ECS service) and the second parameter combination corresponding to the second application (for example, an EAS service) are considered as a same parameter combination when matching an existing session, and may match a same session. Therefore, the requirement 1 is met. When the UE is located in the VPLMN, the first indication information is invalid. Therefore, a same session cannot be matched because the first parameter combination corresponding to an ECS is different from the second parameter combination corresponding to an EAS. Therefore, the requirement 2 is met.

With reference to the seventh aspect, in some implementations of the seventh aspect, the first application corresponds to an edge configuration server ECS, and the second application corresponds to an edge application server EAS.

According to an eighth aspect, a communication method is provided. The method includes: A policy control network element sends first indication information to a terminal device, where the first indication information indicates that when the terminal device accesses a home public land mobile network HPLMN, a first parameter combination and a second parameter combination that are included in a first UE route selection policy URSP of the terminal device are considered as a same parameter combination, the first URSP includes a first URSP rule and a second URSP rule, the first URSP rule includes the first parameter combination, the first parameter combination is a data network name DNN and single network slice selection assistance information S-NSSAI that are matched when the terminal device accesses a first application, the second URSP rule includes the second parameter combination, the second parameter combination is a DNN and S-NSSAI that are matched when the terminal device accesses a second application, and the first parameter combination is different from the second parameter combination.

In the foregoing technical solution, a PCF sends the first indication information to a UE, to indicate that when the UE accesses the HPLMN, the first parameter combination corresponding to the first application (for example, an ECS service) and the second parameter combination corresponding to the second application (for example, an EAS service) are considered as a same parameter combination when matching an existing session, and may match a same session. Therefore, the requirement 1 is met. When the UE is located in the VPLMN, the first indication information is invalid. Therefore, a same session cannot be matched because the first parameter combination corresponding to an ECS is different from the second parameter combination corresponding to an EAS. Therefore, the requirement 2 is met.

With reference to the eighth aspect, in some implementations of the eighth aspect, the first application corresponds to an edge configuration server ECS, and the second application corresponds to an edge application server EAS.

According to a ninth aspect, a communication method is provided. The method includes: An access and mobility management network element receives first indication information from a policy control network element, where the first indication information indicates that when the terminal device accesses a home public land mobile network HPLMN, a first parameter combination and a second parameter combination that are included in a first UE route selection policy URSP of the terminal device are considered as a same parameter combination, the first URSP includes a first URSP rule and a second URSP rule, the first URSP rule includes the first parameter combination, the first parameter combination is a data network name DNN and single network slice selection assistance information S-NSSAI that are matched when the terminal device accesses a first application, the second URSP rule includes the second parameter combination, the second parameter combination is a DNN and S-NSSAI that are matched when the terminal device accesses a second application, and the first parameter combination is different from the second parameter combination. The access and mobility management network element receives a request message from the terminal device, where the request message includes the second parameter combination, and the request message is used to request to establish a session corresponding to the second parameter combination. The access and mobility management network element determines that the terminal device accesses the HPLMN and that a first session exists in existing sessions associated with the terminal device, where the first session is a session associated with the first parameter combination. The access and mobility management network element rejects the request message of the terminal device based on the first indication information, and sends a first cause value to the terminal device, where the first cause value indicates the terminal device to reuse the first existing session.

In the foregoing technical solution, an AMF receives the first indication information from a PCF. When a UE accesses the HPLMN, the first parameter combination corresponding to the first application (for example, an ECS service) and the second parameter combination corresponding to the second application (for example, an EAS service) are considered as a same parameter combination. After the AMF receives, from the UE, a session establishment request that includes the second parameter combination, if the AMF determines that the UE is located in the HPLMN, the first indication information takes effect, and there is an existing session associated with the first parameter combination, the AMF returns the first cause value to the UE, to indicate the UE to re-match a session or use the existing session, so as to meet the requirement 1. When the UE is located in the VPLMN, the first indication information is invalid, and a session associated with the second parameter combination continues to be established, so as to meet the requirement 2.

With reference to the ninth aspect, in some implementations of the ninth aspect, the first cause value includes second indication information, and the second indication information indicates that when the terminal device accesses the HPLMN, the first parameter combination and the second parameter combination are considered as the same parameter combination.

With reference to the ninth aspect, in some implementations of the ninth aspect, the first cause value includes a first session identifier, and the first session identifier indicates the terminal device to reuse the first session.

With reference to the ninth aspect, in some implementations of the ninth aspect, the first application corresponds to an edge configuration server ECS, and the second application corresponds to an edge application server EAS.

According to a tenth aspect, a communication method is provided. The method includes: A policy control network element sends first indication information to an access and mobility management network element, where the first indication information indicates that when a terminal device accesses a home public land mobile network HPLMN, a first parameter combination and a second parameter combination that are included in a first UE route selection policy URSP of the terminal device are considered as a same parameter combination, the first URSP includes a first URSP rule and a second URSP rule, the first URSP rule includes the first parameter combination, the first parameter combination is a data network name DNN and single network slice selection assistance information S-NSSAI that are matched when the terminal device accesses a first application, the second URSP rule includes the second parameter combination, the second parameter combination is a DNN and S-NSSAI that are matched when the terminal device accesses a second application, and the first parameter combination is different from the second parameter combination.

In the foregoing technical solution, a PCF sends the first indication information to an AMF to inform the AMF that when a UE accesses the HPLMN, the first parameter combination corresponding to the first application (for example, an ECS service) and the second parameter combination corresponding to the second application (for example, an EAS service) are considered as a same parameter combination. If it is determined that the UE is located in the HPLMN, the first indication information takes effect, and there is an existing session associated with the first parameter combination, the AMF may indicate the UE to re-match a session or use the existing session, so as to meet the requirement 1. When the UE is located in the VPLMN, the first indication information is invalid, and a session associated with the second parameter combination continues to be established, so as to meet the requirement 2.

With reference to the tenth aspect, in some implementations of the tenth aspect, the first application corresponds to an edge configuration server ECS, and the second application corresponds to an edge application server EAS.

According to an eleventh aspect, a communication method is provided. The method includes: A terminal device determines a first UE route selection policy URSP, where the first URSP includes a first URSP rule and a second URSP rule, the first URSP rule includes a first parameter combination, the first parameter combination is a data network name DNN and single network slice selection assistance information S-NSSAI that are matched when the terminal device accesses a first application, the second URSP rule includes a second parameter combination, the second parameter combination is a DNN and S-NSSAI that are matched when the terminal device accesses a second application, and the first parameter combination is different from the second parameter combination. The terminal device starts the first application. The terminal device determines, according to the first URSP rule, to use a first session to transmit a service of the first application, where the first session corresponds to the first parameter combination. The terminal device accesses a home public land mobile network HPLMN. The terminal device starts the second application. The terminal device sends a request message to an access and mobility management network element, where the request message includes the second parameter combination, and the request message is used to request to establish a session corresponding to the second parameter combination. The terminal device receives a first cause value from the access and mobility management network element, where the first cause value indicates the terminal device to reuse the first session. The terminal device reuses, based on the first cause value, the first session to transmit a service of the second application.

In the foregoing technical solution, when a LTE accesses the second application (for example, an EAS service), if the UE is located in the HPLMN, an AMF may indicate the UE to reuse an existing session associated with the first parameter combination, so as to meet the requirement 1. When the LTE is located in the VPLMN, the AMF continues to establish a session associated with the second parameter combination, so as to meet the requirement 2.

With reference to the eleventh aspect, in some implementations of the eleventh aspect, the first cause value includes second indication information, and the second indication information indicates that when the terminal device accesses the HPLMN, the first parameter combination and the second parameter combination are considered as a same parameter combination.

With reference to the eleventh aspect, in some implementations of the eleventh aspect, the first cause value includes a first session identifier, and the first session identifier indicates the terminal device to reuse the first session.

With reference to the eleventh aspect, in some implementations of the eleventh aspect, the first application corresponds to an edge configuration server ECS, and the second application corresponds to an edge application server EAS.

According to a twelfth aspect, a communication method is provided. The method includes: A terminal device determines a first UE route selection policy URSP, where the first URSP includes a first URSP rule and a second URSP rule, the first URSP rule includes a first parameter combination, the first parameter combination is a data network name DNN and single network slice selection assistance information S-NSSAI that are matched when the terminal device accesses a first application, the second URSP rule includes a second parameter combination, the second parameter combination is a DNN and S-NSSAI that are matched when the terminal device accesses a second application, the first parameter combination and the second parameter combination are the same, and subscription data of the first parameter combination and the second parameter combination indicates the terminal device to use a home routed HR session to access the first application or the second application when accessing a visited public land mobile network VPLMN. The terminal device receives first indication information from a visited policy control network element, where the first indication information indicates the terminal device to use a local breakout LBO session to access the second application when the terminal device is located in the VPLMN. The terminal device accesses the VPLMN. The terminal device starts the second application. The terminal device determines, according to the second URSP rule and the first indication information, to use a first session to transmit a service of the second application, where the first session is associated with an LBO session of a third parameter combination, and the third parameter combination includes a third DNN and third S-NSSAI.

In the foregoing technical solution, a V-PCF sends the first indication information to a UE, to indicate the UE to use the LBO session to access the second application (for example, an EAS service) deployed in the VPLMN. The first indication information is valid within a range of the VPLMN. When the LTE needs to access the EAS, the UE needs to use the first indication information as one of criteria for matching a URSP rule. When a new session needs to be established for the EAS, the LTE includes the second indication information in a session establishment request, to indicate to establish the LBO session, so as to meet a scenario corresponding to the question 2. When the LTE is located in the HPLMN, the first indication information is invalid, and the UE may access the first application (for example, an ECS service) and the second application (for example, an EAS service) by using a same session, so as to meet a scenario corresponding to the question 1.

With reference to the twelfth aspect, in some implementations of the twelfth aspect, before the terminal device determines to use a first session to transmit a service of the second application, the method further includes: The terminal device sends a request message to an access and mobility management network element, where the request message includes the second parameter combination and second indication information, and the second indication information indicates to establish an LBO session corresponding to the second parameter combination.

With reference to the twelfth aspect, in some implementations of the twelfth aspect, the first application corresponds to an edge configuration server ECS, and the second application corresponds to an edge application server EAS.

According to a thirteenth aspect, a communication method is provided. The method includes: A visited policy control network element sends first indication information to a terminal device, where the first indication information indicates the terminal device to use a local breakout LBO session to access a second application when accessing a visited public land mobile network VPLMN.

In the foregoing technical solution, a V-PCF sends the first indication information to a UE, to indicate the UE to access, by using the LBO session, the second application (EAS) deployed in the VPLMN, so as to meet a scenario corresponding to the question 2. When the UE is located in the HPLMN, the first indication information is invalid, and the UE may access the first application (for example, an ECS service) and the second application (for example, an EAS service) by using a same session, so as to meet a scenario corresponding to the question 1.

With reference to the thirteenth aspect, in some implementations of the tenth aspect, the second application corresponds to an edge application server EAS.

According to a fourteenth aspect, a communication method is provided. The method includes: An access and mobility management network element receives a request message from a terminal device, where the request message includes a second parameter combination and second indication information, the second parameter combination includes a second data network name DNN and second single network slice selection assistance information S-NSSAI, and the second indication information indicates to establish a local breakout LBO session corresponding to the second parameter combination. The access and mobility management network element determines, based on subscription data of the terminal device, that the second parameter combination does not support LBO session establishment. The access and mobility management network element determines a third parameter combination, where the third parameter combination includes a third DNN and third S-NSSAI, and the third parameter combination is a parameter combination that supports the LBO session establishment. The access and mobility management network element establishes an LBO session corresponding to the third parameter combination.

In the foregoing technical solution, when a new session needs to be established for an EAS, a UE includes the second indication information in a session establishment request, to indicate to establish the LBO session. After receiving the request, an AMF determines, based on subscription data of the UE, whether (DNN, S-NSSAI) in the request can support establishment of the LBO session. If the LBO session cannot be established, the AMF modifies (DNN, S-NSSAI) to continue to establish the LBO session, so as to meet a scenario corresponding to the question 2. When the UE is located in the HPLMN, the first indication information is invalid, and the UE may access an ECS and an EAS by using a same session, so as to meet a scenario corresponding to the question 1.

According to a fifteenth aspect, this application provides a communication apparatus. The communication apparatus has a function of implementing the method according to the first aspect or any possible implementation of the first aspect, or has a function of implementing the method according to the third aspect or any possible implementation of the third aspect, or has a function of implementing the method according to the seventh aspect or any possible implementation of the seventh aspect, or has a function of implementing the method according to the eleventh aspect or any possible implementation of the eleventh aspect, or has a function of implementing the method according to the twelfth aspect or any possible implementation of the twelfth aspect. The function may be implemented by hardware, or may be implemented by hardware executing corresponding software. The hardware or the software includes one or more units corresponding to the foregoing function.

According to a sixteenth aspect, this application provides a communication apparatus. The communication apparatus has a function of implementing the method according to the second aspect or any possible implementation of the second aspect, or has a function of implementing the method according to the eighth aspect or any possible implementation of the eighth aspect, or has a function of implementing the method according to the tenth aspect or any possible implementation of the tenth aspect. The function may be implemented by hardware, or may be implemented by hardware executing corresponding software. The hardware or the software includes one or more units corresponding to the foregoing function.

According to a seventeenth aspect, this application provides a communication apparatus. The communication apparatus has a function of implementing the method according to the fourth aspect or any possible implementation of the fourth aspect. The function may be implemented by hardware, or may be implemented by hardware executing corresponding software. The hardware or the software includes one or more units corresponding to the foregoing function.

According to an eighteenth aspect, this application provides a communication apparatus. The communication apparatus has a function of implementing the method according to the fifth aspect or any possible implementation of the fifth aspect, or has a function of implementing the method according to the sixth aspect or any possible implementation of the sixth aspect. The function may be implemented by hardware, or may be implemented by hardware executing corresponding software. The hardware or the software includes one or more units corresponding to the foregoing function.

According to a nineteenth aspect, this application provides a communication apparatus. The communication apparatus has a function of implementing the method according to the ninth aspect or any possible implementation of the ninth aspect, or has a function of implementing the method according to the fourteenth aspect or any possible implementation of the fourteenth aspect. The function may be implemented by hardware, or may be implemented by hardware executing corresponding software. The hardware or the software includes one or more units corresponding to the foregoing function.

According to a twentieth aspect, this application provides a communication apparatus. The communication apparatus has a function of implementing the method according to the thirteenth aspect or any possible implementation of the thirteenth aspect. The function may be implemented by hardware, or may be implemented by hardware executing corresponding software. The hardware or the software includes one or more units corresponding to the foregoing function.

According to a twenty-first aspect, this application provides a communication device. The communication device includes at least one processor, where the at least one processor is coupled to at least one memory, the at least one memory is configured to store a computer program or instructions, and the at least one processor is configured to invoke the computer program or the instructions from the at least one memory and run the computer program or the instructions, so that the communication device performs the method according to the first aspect or any possible implementation of the first aspect, or performs the method according to the third aspect or any possible implementation of the third aspect, or performs the method according to the seventh aspect or any possible implementation of the seventh aspect, or performs the method according to the eleventh aspect or any possible implementation of the eleventh aspect, or performs the method according to the twelfth aspect or any possible implementation of the twelfth aspect.

In an example, the communication apparatus may be a terminal device.

In another example, the communication apparatus may be a component (for example, a chip or an integrated circuit) installed in the terminal device.

According to a twenty-second aspect, this application provides a communication device. The communication device includes at least one processor, where the at least one processor is coupled to at least one memory, the at least one memory is configured to store a computer program or instructions, and the at least one processor is configured to invoke the computer program or the instructions from the at least one memory and run the computer program or the instructions, so that the communication device performs the method according to the second aspect or any possible implementation of the second aspect, or performs the method according to the eighth aspect or any possible implementation of the eighth aspect, or performs the method according to the tenth aspect or any possible implementation of the tenth aspect, or performs the method according to the third aspect or any possible implementation of the third aspect.

In an example, the communication apparatus may be a policy control network element.

In another example, the communication apparatus may be a component (for example, a chip or an integrated circuit) installed in the policy control network element.

According to a twenty-third aspect, this application provides a communication device. The communication device includes at least one processor, where the at least one processor is coupled to at least one memory, the at least one memory is configured to store a computer program or instructions, and the at least one processor is configured to invoke the computer program or the instructions from the at least one memory and run the computer program or the instructions, so that the communication device performs the method according to the fourth aspect or any possible implementation of the fourth aspect.

In an example, the communication apparatus may be a network device.

In another example, the communication apparatus may be a component (for example, a chip or an integrated circuit) installed in the network device.

According to a twenty-fourth aspect, this application provides a communication device. The communication device includes at least one processor, where the at least one processor is coupled to at least one memory, the at least one memory is configured to store a computer program or instructions, and the at least one processor is configured to invoke the computer program or the instructions from the at least one memory and run the computer program or the instructions, so that the communication device performs the method according to the fifth aspect or any possible implementation of the fifth aspect, or performs the method according to the sixth aspect or any possible implementation of the sixth aspect.

In an example, the communication apparatus may be a home policy control network element.

In another example, the communication apparatus may be a component (for example, a chip or an integrated circuit) installed in the home policy control network element.

According to a twenty-fifth aspect, this application provides a communication device. The communication device includes at least one processor, where the at least one processor is coupled to at least one memory, the at least one memory is configured to store a computer program or instructions, and the at least one processor is configured to invoke the computer program or the instructions from the at least one memory and run the computer program or the instructions, so that the communication device performs the method according to the ninth aspect or any possible implementation of the ninth aspect, or performs the method according to the fourteenth aspect or any possible implementation of the fourteenth aspect.

In an example, the communication apparatus may be an access and mobility management network element.

In another example, the communication apparatus may be a component (for example, a chip or an integrated circuit) installed in the access and mobility management network element.

According to a twenty-sixth aspect, this application provides a communication device. The communication device includes at least one processor, where the at least one processor is coupled to at least one memory, the at least one memory is configured to store a computer program or instructions, and the at least one processor is configured to invoke the computer program or the instructions from the at least one memory and run the computer program or the instructions, so that the communication device performs the method according to the thirteenth aspect or any possible implementation of the thirteenth aspect.

In an example, the communication apparatus may be a visited policy control network element.

In another example, the communication apparatus may be a component (for example, a chip or an integrated circuit) installed in the visited policy control network element.

According to a twenty-seventh aspect, this application provides a computer program product, where the computer program product includes computer program code. When the computer program code is run on a computer, the method according to the first aspect or any possible implementation of the first aspect is enabled to be performed, or the method according to the third aspect or any possible implementation of the third aspect is enabled to be performed, or the method according to the seventh aspect or any possible implementation of the seventh aspect is enabled to be performed, or the method according to the eleventh aspect or any possible implementation of the eleventh aspect is enabled to be performed, or the method according to the twelfth aspect or any possible implementation of the twelfth aspect is enabled to be performed.

According to a twenty-eighth aspect, this application provides a computer program product, where the computer program product includes computer program code. When the computer program code is run on a computer, the method according to the second aspect or any possible implementation of the second aspect is enabled to be performed, or the method according to the eighth aspect or any possible implementation of the eighth aspect is enabled to be performed, or the method according to the tenth aspect or any possible implementation of the tenth aspect is enabled to be performed.

According to a twenty-ninth aspect, this application provides a computer program product, where the computer program product includes computer program code. When the computer program code is run on a computer, the method according to the fourth aspect or any possible implementation of the fourth aspect is enabled to be performed.

According to a thirtieth aspect, this application provides a computer program product, where the computer program product includes computer program code. When the computer program code is run on a computer, the method according to the fifth aspect or any possible implementation of the fifth aspect is enabled to be performed, or the method according to the sixth aspect or any possible implementation of the sixth aspect is enabled to be performed.

According to a thirty-first aspect, this application provides a computer program product, where the computer program product includes computer program code. When the computer program code is run on a computer, the method according to the ninth aspect or any possible implementation of the ninth aspect is enabled to be performed, or the method according to the fourteenth aspect or any possible implementation of the fourteenth aspect is enabled to be performed.

According to a thirty-second aspect, this application provides a computer program product, where the computer program product includes computer program code. When the computer program code is run on a computer, the method according to the thirteenth aspect or any possible implementation of the thirteenth aspect is enabled to be performed.

According to a thirty-third aspect, this application provides a computer-readable storage medium, where the computer-readable storage medium stores computer instructions. When the computer instructions are run on a computer, the method according to the first aspect or any possible implementation of the first aspect is enabled to be performed, or the method according to the third aspect or any possible implementation of the third aspect is enabled to be performed, or the method according to the seventh aspect or any possible implementation of the seventh aspect is enabled to be performed, or the method according to the eleventh aspect or any possible implementation of the eleventh aspect is enabled to be performed, or the method according to the twelfth aspect or any possible implementation of the twelfth aspect is enabled to be performed.

According to a thirty-fourth aspect, this application provides a computer-readable storage medium, where the computer-readable storage medium stores computer instructions. When the computer instructions are run on a computer, the method according to the second aspect or any possible implementation of the second aspect is enabled to be performed, or the method according to the eighth aspect or any possible implementation of the eighth aspect is enabled to be performed, or the method according to the tenth aspect or any possible implementation of the tenth aspect is enabled to be performed.

According to a thirty-fifth aspect, this application provides a computer-readable storage medium, where the computer-readable storage medium stores computer instructions. When the computer instructions are run on a computer, the method according to the fourth aspect or any possible implementation of the fourth aspect is enabled to be performed.

According to a thirty-sixth aspect, this application provides a computer-readable storage medium, where the computer-readable storage medium stores computer instructions. When the computer instructions are run on a computer, the method according to the fifth aspect or any possible implementation of the fifth aspect is enabled to be performed, or the method according to the sixth aspect or any possible implementation of the sixth aspect is enabled to be performed.

According to a thirty-seventh aspect, this application provides a computer-readable storage medium, where the computer-readable storage medium stores computer instructions. When the computer instructions are run on a computer, the method according to the ninth aspect or any possible implementation of the ninth aspect is enabled to be performed, or the method according to the fourteenth aspect or any possible implementation of the fourteenth aspect is enabled to be performed.

According to a thirty-eighth aspect, this application provides a computer-readable storage medium, where the computer-readable storage medium stores computer instructions. When the computer instructions are run on a computer, the method according to the thirteenth aspect or any possible implementation of the thirteenth aspect is enabled to be performed, or the method according to the third aspect or any possible implementation of the third aspect is enabled to be performed, or the method according to the eleventh aspect or any possible implementation of the eleventh aspect is enabled to be performed, or the method according to the twelfth aspect or any possible implementation of the twelfth aspect is enabled to be performed.

### BRIEF DESCRIPTION OF DRAWINGS

FIG. 1 is a schematic diagram of a scenario applicable to an embodiment of this application;
FIG. 2 is a schematic diagram of a network architecture applicable to an embodiment of this application;
FIG. 3 is another schematic diagram of a network architecture applicable to an embodiment of this application;
FIG. 4 is still another schematic diagram of a network architecture applicable to an embodiment of this application;
FIG. 5 is a schematic diagram of an edge computing network architecture according to an embodiment of this application;
FIG. 6 is a schematic interaction diagram of a communication method according to an embodiment of this application;
FIG. 7 is a schematic interaction diagram of another communication method according to an embodiment of this application;
FIG. 8 is a schematic interaction diagram of still another communication method according to an embodiment of this application;
FIG. 9 is a schematic interaction diagram of still another communication method according to an embodiment of this application;
FIG. 10 is a schematic interaction diagram of still another communication method according to an embodiment of this application;
FIG. 11 is a schematic interaction diagram of still another communication method according to an embodiment of this application;
FIG. 12 is a schematic interaction diagram of still another communication method according to an embodiment of this application;
FIG. 13 is a schematic interaction diagram of still another communication method according to an embodiment of this application;
FIG. 14 is a schematic block diagram of a communication apparatus 1000 according to this application;
FIG. 15 is a schematic block diagram of a communication apparatus 2000 according to this application;
FIG. 16 is a schematic block diagram of a communication apparatus 3000 according to this application;
FIG. 17 is a schematic diagram of a structure of a communication apparatus 10 according to this application;
FIG. 18 is a schematic diagram of a structure of a communication apparatus 20 according to this application; and
FIG. 19 is a schematic diagram of a structure of a communication apparatus 30 according to this application.

### DESCRIPTION OF EMBODIMENTS

The following describes technical solutions of this application with reference to accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, and the like. The technical solutions provided in this application may be further applied to a future communication system, for example, a 6th generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or other communication systems.

FIG. 2 is a schematic diagram of a network architecture applicable to an embodiment of this application. It may be understood that the network architecture is a non-roaming network architecture of the Service and System Aspects Working Group 2 (service and system aspects working group 2, SA WG2). As shown in FIG. 2, for example, the network architecture may include but is not limited to a network slice-specific authentication and authorization function (network slice-specific authentication and authorization function, NSSAAF) network element, a network slice selection function (network slice selection function, NSSF) network element, an authentication server function (authentication server function, AUSF) network element, a unified data management (unified data management, UDM) network element, an access and mobility management function (access and mobility management function, AMF) network element, a session management function (session management function, SMF) network element, a policy control function (policy control function, PCF) network element, an application function (application function, AF), user equipment (user equipment, UE), an access network (access network, AN), a user plane function (user plane function, UPF) network element, a data network (data network, DN), and the like.

The following briefly describes the network elements shown in FIG. 2.
1. A terminal device may be referred to as user equipment (user equipment, UE), an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal device may be a device that provides voice/data connectivity to a user, for example, a handheld device or vehicle-mounted device with a wireless connectivity function, or the like. Currently, some examples of the terminal may be: a mobile phone (mobile phone), a pad (pad), a computer (for example, a notebook computer, a palmtop computer, or the like) with a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device with a wireless communication function, another processing device connected to a wireless modem, a vehicle-mounted device, a wearable device, a terminal device in a 5G network, a terminal device in a future evolved public land mobile network (public land mobile network, PLMN), and the like.

In addition, the terminal device may alternatively be a terminal device in an internet of things (Internet of things, IoT) system. IoT is an important part in future development of information technologies. A main technical feature of the IoT is to connect things to a network by using a communication technology, to implement an intelligent network for human-machine interconnection and thing-thing interconnection. IoT technologies can achieve massive connections, deep coverage, and terminal power saving by using, for example, a narrow band (narrow band, NB) technology.

In addition, the terminal device may further include sensors such as an intelligent printer, a train detector, a gas station, and the like, and main functions include: collecting data (which is a function of some terminal devices), receiving control information and downlink data of a network device, sending an electromagnetic wave, and transmitting uplink data to the network device.

It should be understood that the terminal device may be any device that can access a network. The terminal device may communicate with an access network device by using an air interface technology.

Optionally, the UE may be configured to be a base station. For example, the UE may serve as a scheduling entity that provides sidelink signals between UEs in V2X, D2D, or the like. For example, a cellular phone and a car communicate with each other through a sidelink signal. The cellular phone communicates with a smart home device without relaying a communication signal through a base station.

2. An access network (access network, AN) may provide a network access function for authorized users in a specific area, and includes a radio access network (radio access network, RAN) device and an AN device. The RAN device is mainly a radio network device in a 3rd generation partnership project (3rd generation partnership project, 3GPP) network, and the AN device may be an access network device defined in non-3GPP (non-3GPP).

Different access networks may use different access technologies. Currently, there are two types of radio access technologies: a 3GPP access technology (for example, a radio access technology used in a 3G, 4G, or 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN. The non-3GPP access technology is an access technology that does not comply with the 3GPP standard specification, for example, an air interface technology represented by an access point (access point, AP) in wireless fidelity (wireless fidelity, Wi-Fi), a worldwide interoperability microwave access (worldwide interoperability for microwave access, WiMAX) network, a code division multiple access (code division multiple access, CDMA) network, or the like. The access network device (AN device) may allow the terminal device and a 3GPP core network to perform interconnection and interworking by using the non-3GPP technology.

An access network that implements a network access function by using a wireless communication technology may be referred to as a RAN. The radio access network can be responsible for functions such as radio resource management, quality of service (quality of service, QoS) management, data compression and encryption, and the like on an air interface side. The radio access network provides an access service for the terminal device, and further completes forwarding of a control signal and user data between a terminal and a core network.

For example, the radio access network may include but is not limited to: a macro base station, a micro base station (also referred to as a small cell), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an AP in a Wi-Fi system, a radio relay node, a radio backhaul node, a transmission point (transmission point, TP), a transmission and reception point (transmission and reception point, TRP), or the like. The radio access network may further include a gNB or a transmission point (TRP or TP) in a 5G (for example, NR) system, or one antenna panel or a group of antenna panels (including a plurality of antenna panels) of a base station in the 5G system. Alternatively, the radio access network may include a network node constituting a gNB or a transmission point, for example, a baseband unit (BBU), a distributed unit (distributed unit, DU), a base station in a next-generation 6G communication system, or the like. A specific technology and a specific device form that are used by a radio access network device are not limited in embodiments of this application.

The access network may provide a service for a cell. The terminal device may communicate with the cell over a transmission resource (for example, a frequency domain resource or a spectrum resource) allocated by the access network device.
3. An AMF network element is mainly used for mobility management, access management, and the like, for example, user location update, user network registration, user handover, and the like. The AMF may be further configured to implement functions other than session management in a mobility management entity (mobility management entity, MME), for example, lawful interception, access authorization (or authentication), and the like.
4. An SMF network element is mainly used for session management, UE internet protocol (Internet Protocol, IP) address allocation and management, manageable user plane function selection, termination of interfaces toward policy control or charging functions, downlink data notification, and the like. In embodiments of this application, the SMF is mainly responsible for session management in a mobile network, for example, session establishment, modification, and release. Specific functions may include, for example, allocating an IP address to a terminal device, and selecting a UPF that provides a packet forwarding function.
5. A UPF network element is responsible for forwarding and receiving user data in a terminal device. For example, the UPF network element may receive user data from a data network (data network, DN), and transmit the user data to the terminal device via an access network device. The UPF network element may further receive user data from the terminal device via an access network device, and forward the user data to a data network. Transmission resources and a scheduling function used by the UPF network element to serve the terminal device are managed and controlled by the SMF network element.
6. A PCF network element is configured to support a unified policy framework to govern network behavior, provide policy rules for control plane function network elements (such as an AMF network element, an SMF network element, and the like), access user subscription information relevant for policy decisions, and the like.
7. An AF network element mainly supports interaction with a 3GPP core network to provide services, for example, application influence on traffic routing decisions, interacting with a policy control function (PCF), or providing third parties for the network side. An application server (application server, AS) network element may be co-deployed with the AF and interact with a UPF to receive, send, and process uplink and downlink packets on a user plane.
8. AUDM network element is configured to generate authentication credentials, handle user identification (for example, store and manage subscription permanent identifiers), control access authorization, manage subscription data, and the like.
9. A data network (DN) is a service network that provides data services for users, for example, the Internet (Internet), a third-party service network, an IP multi-media service (IP multi-media service, IMS) network, and the like.
10. An AUSF network element is mainly configured for user authentication and the like.

In the network architecture shown in FIG. 2, the network elements may communicate with each other through interfaces shown in the figure, and some interfaces may be implemented as service-based interfaces. As shown in FIG. 2, the UE and the AMF may interact with each other through an N1 interface, and an interaction message may be referred to as, for example, an N1 message (N1 Message). The RAN and the AMF may interact with each other through an N2 interface, and the N2 interface may be configured to send a non-access stratum (non-access stratum, NAS) message and the like. The RAN and the UPF may interact with each other through an N3 interface, and the N3 interface may be configured to transmit user plane data and the like. The SMF and the UPF may interact with each other through an N4 interface, and the N4 interface may be configured to transmit information such as tunnel identifier information of an N3 connection, data buffering indication information, and a downlink data notification message. The AF and the PCF may interact with each other through an N5 interface, and the N5 interface may be configured for application service request delivery and network events. The UPF and the DN may interact with each other through an N6 interface, and the N6 interface may be configured to transmit user plane data and the like. The PCF and the SMF may interact with each other through an N7 interface, and the N7 interface may be configured to deliver a protocol data unit (protocol data unit, PDU) session (PDU session) granularity, a service data flow granularity control policy, and the like. The AMF and the UDM may interact with each other through an N8 interface, and the N8 interface may be used by the AMF to obtain access and mobility management related subscription data and authentication data from the UDM, and used by the AMF to register current mobility management related information of the UE with the UDM, and the like. N9 is an interface between UPFs, for example, an interface between a visited policy control function (visited policy control function, V-PCF) and a home policy control function (home policy control function, H-PCF), or an interface between a UPF connected to the DN and a UPF connected to the RAN, and is configured to transmit user plane data between the UPFs. The SMF and the UDM may interact with each other through an N10 interface, and the N10 interface may be used by the SMF to obtain session management related subscription data from the UDM, and used by the SMF to register current session related information of the UE with the UDM. The SMF and the AMF may interact with each other through an N11 interface, and the N11 interface may be configured to transfer PDU session tunnel information between the RAN and the UPF, transfer a control message to be sent to the UE, transfer radio resource control information to be sent to the RAN, and the like. N2: The AMF and the RAN may interact with each other through an N12 interface, and the N12 interface may be configured to transfer radio bearer control information from a core network side to the RAN, and the like. The PCF and the AMF may interact with each other through an N15 interface, and the N15 interface may be configured to deliver a UE policy, an access control related policy, and the like. Relationships between other interfaces and network elements are shown in FIG. 2. For brevity, details are not described herein.

It should be understood that the foregoing network architecture applied to embodiments of this application is merely an example for description, and a network architecture applicable to embodiments of this application is not limited thereto. Any network architecture that can implement functions of the foregoing network elements is applicable to embodiments of this application.

It should be further understood that the AMF, SMF, UPF, PCF, UDM, NSSF, AUSF, and the like shown in FIG. 2 may be understood as network elements configured to implement different functions, for example, may be combined into a network slice as required. These network elements may be independent devices, or may be integrated into a same device to implement different functions, or may be network components in a hardware device, or may be software functions running on dedicated hardware, or may be instantiated virtualization functions on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 5G network and other networks in the future. For example, in a 6G network, some or all of the foregoing network elements may still use terms in 5G, or may use other names.

It should be further understood that names of interfaces between the foregoing network elements in FIG. 2 are only examples, and the interfaces may have other names during specific implementation. This is not specifically limited in this application. In addition, names of messages (or signaling) transmitted between the foregoing network elements are merely examples, and do not constitute any limitation on functions of the messages.

For ease of understanding embodiments of this application, the following first briefly describes several terms in this application.
1. Home public land mobile network (public land mobile network, PLMN): In a country or region, a standard-specific cellular mobile communication network of an operator is referred to as a PLMN. The PLMN that a UE subscribes to is referred to as a home PLMN (home PLMN, HPLMN), which represents a home operator of the subscribed UE.
2. Visited PLMN: When a UE is out of the coverage of the HPLMN due to movement or other reasons, if there is a PLMN that meets the following conditions: (1) The current location of the UE is in the coverage of the PLMN; and (2) An operator of the PLMN and an HPLMN operator of the UE have signed a roaming agreement (a business agreement between operators, which may include but is not limited to a service provided for a subscriber of a network of a peer operator, a charging manner, and the like), the UE may access the PLMN, and the PLMN is referred to as a visited PLMN (visited PLMN, VPLMN). A UE accessing a VPLMN is referred to as roaming. Regardless of whether the UE is roaming, the PLMN that the UE currently accesses is referred to as a serving PLMN (serving PLMN).

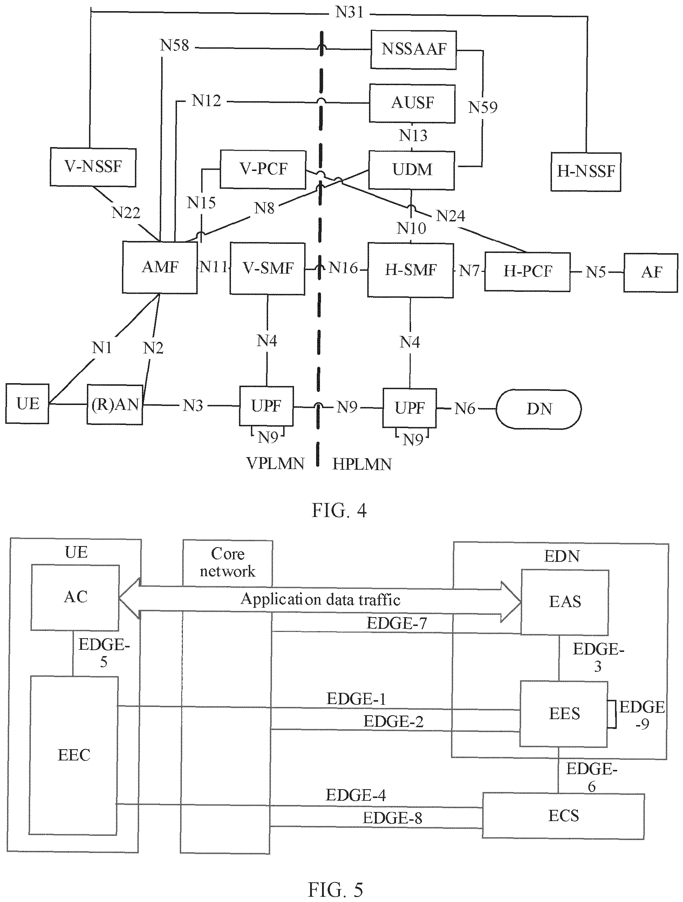

The following describes a roaming network structure applicable to embodiments of this application with reference to FIG. 3 and FIG. 4.

FIG. 3 is another schematic diagram of a network architecture applicable to an embodiment of this application. It can be seen from FIG. 3 that, in the network architecture, a user plane of a UE is terminated in the VPLMN, and the roaming scenario is local breakout (local breakout, LBO) roaming. It may be understood that the network architecture is an SAWG2 LBO roaming network architecture.

FIG. 4 is still another schematic diagram of a network architecture applicable to an embodiment of this application. It can be seen from FIG. 4 that, in the network architecture, a user plane of a UE is terminated in the HPLMN, and the roaming scenario is home routed (home routed, HR) roaming. It may be understood that the network architecture is an SA WG2 HR roaming network architecture.

It should be understood that, that the user plane of the UE is terminated in the VPLMN or the HPLMN means that a UPF connected to an N6 interface in the roaming network structures shown in FIG. 3 and FIG. 4 is located in the VPLMN or the HPLMN.

3. Edge computing (edge computing, EC): Edge computing is a new distributed computing mode. Specifically, computing and storage resources are provided for users at a network edge. "Edge" is defined as any network location on a path between a terminal device and a cloud data center, and these locations are closer to a user than the cloud data center. The edge computing features a lower delay, lower energy consumption, bandwidth saving, high privacy, and higher intelligence. As a key enabling technology for implementing the vision of the Internet of Things and 5G, edge computing (and derivative concepts thereof) is at an intersection of a computing mode and network communication, and is irreplaceable in meeting various service requirements and improving user experience.

The following describes an edge computing network architecture applicable to embodiments of this application with reference to FIG. 5.

FIG. 5 is a schematic diagram of the edge computing network architecture according to an embodiment of this application. As shown in FIG. 5, an edge application server (edge application server, EAS) and an edge enabler server (edge enabler server, EES) are deployed in a local edge data network (edge data network, EDN), and an edge configuration server (edge configuration server, ECS) provides EES-related configuration information, including information related to the EDN in which the EES is deployed. A UE includes two functional components: an application client (application client, AC) and an edge enabler client (edge enabler client, EEC). It may be understood that the network architecture is an SA WG6 edge computing network architecture. Functions of the foregoing network elements are as follows:

The AC is an application client installed in the UE.

The EEC provides support functions required by the AC, including EAS discovery (EAS discovery), obtaining and providing configuration information for traffic exchange between the AC and the EAS, and the like.

The ECS provides support functions required for the EEC to access the EES, including providing edge configuration information (such as a uniform resource identifier (uniform resource identifier, URI) and service area of the EES) for the EEC, enabling the EES to register related information with the ECS, and the like.

The EES provides support functions required by the EAS and the EEC, including providing EAS configuration information for the EEC, enabling the EAS to register related information with the EES, supporting application context migration, and the like.

The EAS is an application server deployed in the EDN to provide an EC service.

In the SA WG2 architecture, the AC and the EEC may be considered as UEs, and the ECS, the EES, and the EAS may be considered as AFs or ASs.

Optionally, the EEC obtains address information of the ECS in one of the following manners: (1) Pre-configuration; (2) Configured by the edge-aware AC; (3) Configured by a user; (4) Delivered by a 5G core network (5G core network, 5GC); and (5) Derived from a PLMN ID. After obtaining the address information of the ECS, the EEC may obtain address information of the EES from the ECS through a service provisioning (service provisioning) process. Further, the EEC may obtain required address information of the EAS from the EES through an EAS discovery process and then access the EAS to obtain a service.

It should be understood that the ECS or the EAS in FIG. 1 is not necessarily deployed by an operator, and the ECS or the EAS may be deployed by a third party. This application only specifies that the ECS or the EAS is deployed at a location covered by an HPLMN or a VPLMN.

4. UE route selection policy (UE route selection policy, URSP): The URSP is a UE policy and is used to determine whether an application is capable of associating with an established packed data unit (packed data unit, PDU) session or whether establishment of a new PDU session needs to be triggered. The URSP may be provided by a PCF of the HPLMN, or may be preconfigured in a UE. It should be noted that when both a preconfigured URSP and a URSP provided by the PCF exist in the UE, the UE uses only the URSP provided by the PCF.

The URSP includes at least one URSP rule. When there are valid URSP rules in the UE, the UE performs matching between the application and the rules to determine how to route an uplink data packet. For example, content of the URSP rule is shown in Table 1.

**Table 1**

| Information | | | Description |
|---|---|---|---|
| Rule priority | | | Indicating a priority of the URSP rule in a policy. |
| Service descriptor | | | Indicating an application scope of the URSP rule. |
| Route selection descriptor (route selection descriptor, RSD) list | | | Including at least one RSD. |
| RSD | RSD priority | | Indicating a use priority of a current RSD in a current RSD list. |
| | Route selection component | SSC mode selection | Indicating that a matched service should be routed using a PDU session that supports a session and service continuity (session and service continuity, SSC) mode. |
| | | Network slice selection | Including one or more pieces of single network slice selection assistance information (single network slice selection assistance information, S-NSSAI), and indicating that a matched service should be routed using a PDU session that supports any included S-NSSAI. |
| | | DNN selection | Including one or more data network names (data network names, DNNs), and indicating that a matched service should be routed using a PDU session that supports any included DNN. |
| | | PDU session type selection | Including a PDU session type, and indicating that a matched service should be routed using a PDU session that supports the PDU session type. |
| | | Non-seamless offload indication | Indicating that a matched service is steered to non-3GPP access outside the PDU session when a rule is applied. |
| | | Access type preference | Indicating a preferred access type (3GPP or non-3GPP) for PDU session establishment. |
| | Criterion for route selection validity | | Including time and location validity conditions. If both conditions are met, the current RSD is deemed valid. |

It should be noted that all items in the "route selection component" in Table 1 are optional, but at least one of the items needs to be included.

The following briefly describes a URSP rule matching process.
1. Service descriptor matching: For each newly detected application, for example, a newly detected application X is used as an example for description herein, the UE evaluates a URSP rule according to an order of the rule priority, and determines whether the application X matches a service descriptor of the URSP rule. For example, the service descriptor may be a fully qualified domain name (fully qualified domain name, FQDN), an IP triplet, an application identifier (application identifier, AppID), or the like.
   The application X may refer to a service. For example, the application X may be an ECS service, or may be an EAS service, an EES service, or the like. It can be understood that the ECS is a server that provides the ECS service, the EAS is a server that provides the EAS service, and the EES is a server that provides the EES service. For example, the application X is the "ECS service". If the service descriptor in a URSP rule 1 is "ECS", it indicates that the application X matches the service descriptor of the URSP rule 1.
2. Selection of a route selection descriptor (RSD) by priority: When it is determined that the URSP rule is applicable to the application X, the UE should select an RSD in the URSP rule according to an order of the route selection descriptor priority. The selected RSD is valid only when the usage condition is met. In this application, the "route selection component" is related to "network slice selection" and "DNN selection". Herein, "network slice selection" and "DNN selection" are used as an example to describe conditions for determining a valid RSD.
   (1) If the valid RSD includes S-NSSAI, the S-NSSAI needs to be S-NSSAI available to the UE. Whether S-NSSAI is available to a LTE may be determined based on subscription information of the UE.
   (2) If the valid RSD includes a DNN, the UE needs to be in a service area of the DNN. For example, if the DNN is a local area data network (local area data network, LADN) DNN, the UE needs to be located in a service area of the LADN.
3. Determine whether an existing PDU session can be joined: The UE determines if there is an existing PDU session that matches all components of the selected valid RSD, and the UE compares all the components of the selected valid RSD with the existing PDU session.
   (1) If a matched PDU session exists, the UE associates the application X with the existing PDU session, that is, accesses, through the PDU session, a server corresponding to the application, and transmits traffic or a service of the application X in the PDU session.
   (2) If no matched PDU session exists, the UE attempts to establish a new PDU session using parameters specified by the selected valid RSD.

It should be understood that, (DNN, S-NSSAI)₁ corresponding to the ECS in FIG. 1 indicates that the valid RSD selected by the UE includes (DNN, S-NSSAI)₁. Similarly, (DNN, S-NSSAI)₁ corresponding to the EAS indicates that the valid RSD selected by the UE includes (DNN, S-NSSAI)₂.

The foregoing is detailed descriptions of concepts involved in and network architectures applicable to this application. The following describes a communication method according to this application. The method can meet both the requirement 1 and the requirement 2.

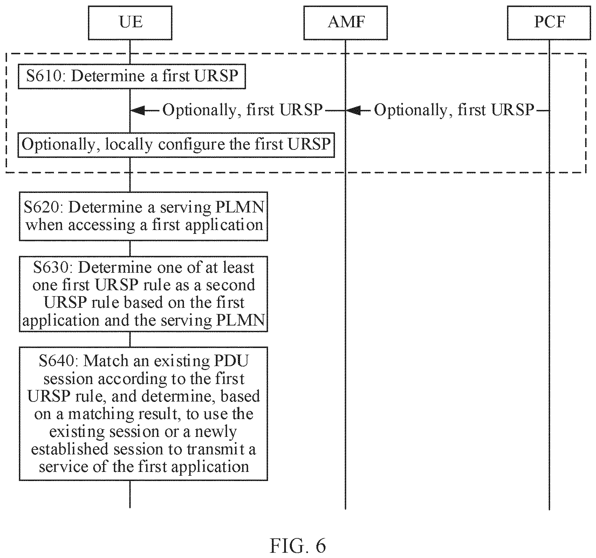

FIG. 6 is a schematic interaction diagram of a communication method according to an embodiment of this application. This embodiment may be applied to the non-roaming network architecture shown in FIG. 2 or the roaming network architecture shown in FIG. 3 and FIG. 4. When the roaming network architecture is applied, a PCF in this embodiment may be an H-PCF or a V-PCF.

S610: A UE determines a first URSP, where the first URSP includes at least one first URSP rule, the first URSP rule corresponds to an HPLMN or a VPLMN of the UE, and the first URSP is used to determine whether a first application is capable of associating with an existing session.

In an implementation, that the first URSP rule corresponds to the HPLMN or the VPLMN of the UE may refer to: The first URSP rule includes a PLMN descriptor, where the PLMN descriptor indicates information about a PLMN corresponding to the first URSP rule.

In another implementation, the first URSP rule may alternatively exclude the PLMN descriptor, and information indicated by the PLMN descriptor may alternatively be configured or delivered together with the associated first URSP rule.

For example, the first application herein may be an ECS service, an EAS service, or an EES service.

It can be learned from the foregoing that, both the requirement 1 and the requirement 2 can be met if the first URSP meets the following conditions: (DNN, S-NSSAI) corresponding to the HPLMN and an ECS is the same as (DNN, S-NSSAI) corresponding to the HPLMN and an EAS, and (DNN, S-NSSAI) corresponding to the VPLMN and the ECS is different from (DNN, S-NSSAI) corresponding to the VPLMN and the EAS. Subscription data of (DNN, S-NSSAI) corresponding to the VPLMN and the ECS corresponds to an HR roaming mode, and subscription data of (DNN, S-NSSAI) corresponding to the VPLMN and the EAS corresponds to an LBO roaming mode. For ease of understanding, this embodiment is described by using an example in which a URSP rule includes a PLMN descriptor. A possible URSP rule in this case is shown in Table 2.

**Table 2**

| URSP rule 1 | |
|---|---|
| Component | Value |
| PLMN descriptor | HPLMN ID |
| Service descriptor | ECS |
| RSD→(DNN, S-NSSAI) | (DNN, S-NSSAI)₁ |
| | |

| URSP rule 2 | |
|---|---|
| Component | Value |
| PLMN descriptor | HPLMN ID |
| Service descriptor | EAS |
| RSD→(DNN, S-NSSAI) | (DNN, S-NSSAI)₁ |
| | |

| URSP rule 3 | |
|---|---|
| Component | Value |
| PLMN descriptor | VPLMN ID |
| Service descriptor | ECS |
| RSD→(DNN, S-NSSAI) | (DNN, S-NSSAI)₂ |
| | |

| URSP rule 4 | |
|---|---|
| Component | Value |
| PLMN descriptor | VPLMN ID |
| Service descriptor | EAS |
| RSD→(DNN, S-NSSAI) | (DNN, S-NSSAI)₃ |

It should be understood that, in the foregoing URSP rule, a component that is less associated with this embodiment is omitted, but this does not indicate that the URSP rule in this embodiment excludes another component. This is the same in the following embodiments.

It should be further understood that values of all components in Table 2 are examples, and do not indicate that the PLMN descriptor can only be a PLMN ID, or the service descriptor can only be a service name. For example, the PLMN descriptor may also be a PLMN name, or the service descriptor may also be a service ID. This is the same in the following embodiments. For ease of understanding, an example in which the PLMN descriptor is deemed the PLMN ID in this embodiment of this application is used for description.

It should be further understood that either of (DNN, S-NSSAI)₂ and (DNN, S-NSSAI)₃ in Table 2 may be the same as (DNN, S-NSSAI)₁, but (DNN, S-NSSAI)₂ and (DNN, S-NSSAI)₃ cannot be both the same as (DNN, S-NSSAI)₁. If (DNN, S-NSSAI)₂ and (DNN, S-NSSAI)₃ are both the same as (DNN, S-NSSAI)₁, the ECS and the EAS in the VPLMN correspond to the same (DNN, S-NSSAI), and consequently, the requirement 2 cannot be met.

Optionally, that the UE determines the first URSP may alternatively be that the UE locally configures the first URSP.

Optionally, as shown in FIG. 6, that the UE determines the first URSP maybe that the UE receives the first URSP from the PCF.

It should be noted that, in an existing standard, there is no interface for direct communication between the UE and the PCF. That the PCF sends the first URSP to the UE only indicates that the PCF sends the first URSP to the UE through a path. For example, the PCF may forward the first URSP to the UE by using an AMF and a RAN, or may forward the first URSP by adding an interface between the PCF and the LTE or the RAN, or the like. The path is not specifically limited in this embodiment. With development of a communication system, this application does not exclude an implementation in which the PCF directly sends the first URSP to the UE.

In a possible specific implementation, if the UE is located in the HPLMN, the UE may be in a "UE configuration update" (UE configuration update, UCU) process. As shown in FIG. 6, the PCF sends the first URSP to the AMF via an Namf_Communication_N1N2MessageTransfer message, and then the AMF sends the first URSP to the UE through a non-access stratum (non-access stratum, NAS) message. If the UE is located in the VPLMN, the H-PCF may first send the first URSP to the V-PCF via an Npcf_UEPolicyControl Create/Update Response message, the V-PCF transparently transmits the first URSP to the AMF via an Namf_Communication_N1N2MessageTransfer message, and then the AMF sends the first URSP to the UE via a NAS message.

S620: The UE starts the first application.

S630: The UE determines one of the at least one first URSP rule as a second URSP rule based on the first application and a serving PLMN.

A PLMN ID indicated by a PLMN descriptor in the second URSP rule is the same as a serving PLMN ID of the UE, and a service descriptor in the second URSP rule matches the first application.

S640: The UE determines, according to the second URSP rule, to use the existing session or a newly established session to transmit a service of the first application.

Specifically, the UE selects a valid RSD from the second URSP rule, and the UE determines whether there is an existing PDU session that matches all components in the valid RSD. If the LTE matches the existing PDU session, the UE accesses, by using the existing session, a server corresponding to the first application, and transmits the service of the first application by using the matched existing PDU session. If the UE matches no existing PDU session, the UE initiates a new PDU session establishment process.

In an existing URSP mechanism, because the URSP configured for the UE is applicable to all PLMNs, the requirement 1 and the requirement 2 cannot be met. In other words, when the UE accesses the HPLMN under an existing standard, if DS₁ and DS₂ in FIG. 1 are the same, when the UE accesses the VPLMN, DS₁ and DS₂ are also the same because the UE uses a same URSP; on the contrary, when the UE accesses the HPLMN under the existing standard, if DS₁ and DS₂ are different, when the UE accesses the VPLMN, DS₁ and DS₂ are also different even if the UE uses the same URSP. However, in the foregoing embodiment, each URSP rule corresponds to one PLMN, and PLMN information corresponding to the URSP rule is used as one of criteria for the UE to match the URSP rule, so that the UE matches a same service to different URSP rules in different PLMNs. In this way, the requirement 1 and the requirement 2 can be met at the same time.

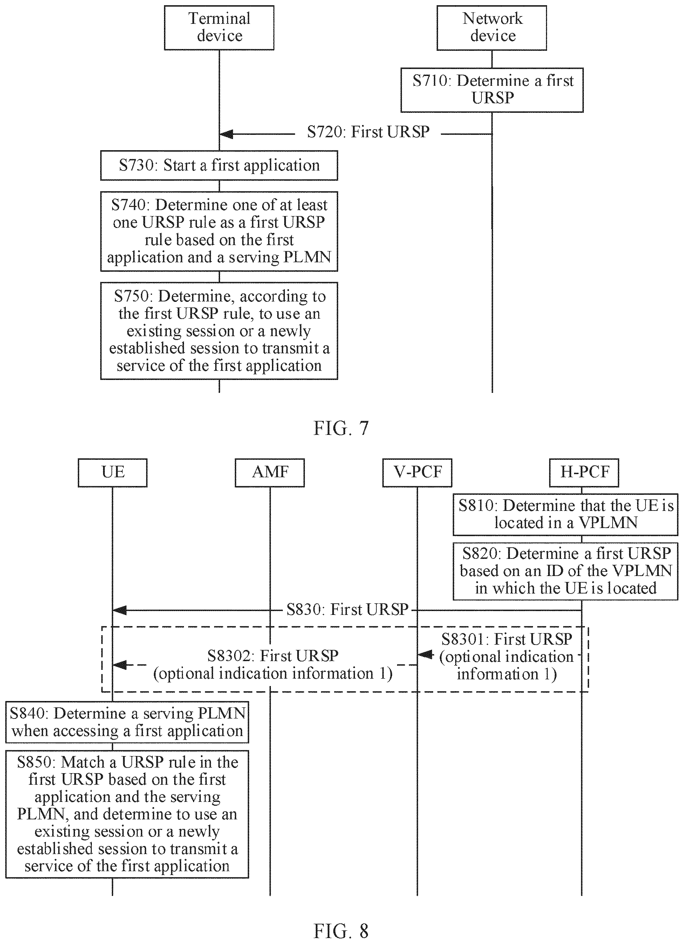

With reference to FIG. 7, the following describes another communication method according to this application. In the method, different URSPs are used when a UE accesses a VPLMN and an HPLMN, that is, a network device delivers a URSP to the UE at a PLMN granularity, so as to meet the requirement 1 and the requirement 2. It should be understood that, in the method, the network device delivers the URSP to the UE based on the PLMN granularity, and the URSP corresponding to the UE accessing the HPLMN is the same as an existing URSP mechanism. Details are not described herein again. A process of delivering the URSP corresponding to the UE accessing the VPLMN is specifically described herein.

FIG. 7 is a schematic interaction diagram of another communication method according to an embodiment of this application.

S710: The network device determines a first URSP, where the first URSP includes at least one URSP rule, the first URSP is a URSP corresponding to a serving PLMN of a terminal device, the serving PLMN is a VPLMN, and the first URSP is used to determine whether a first application is capable of associating with an existing session.

For example, the first application herein may be an ECS or may be an EAS.

Optionally, the network device may be any one of an H-PCF, a V-PCF, or an ECS. An interaction procedure in which the network device is an H-PCF, a V-PCF, or an ECS is not described herein. For details, refer to descriptions in FIG. 8 to FIG. 10.

S720: The network device sends the first URSP to the terminal device.

Correspondingly, the terminal device receives the first URSP from the network device.

Optionally, the network device sends first indication information to the terminal device, where the first indication information indicates that the first URSP corresponds to the VPLMN (that is, the serving PLMN of the terminal device).

S730: The LTE starts the first application.

S740: The UE determines one of the at least one URSP rule as a first URSP rule based on the first application and the serving PLMN. For details, refer to the description in S630. Details are not described herein again.

S750: The UE determines, according to the first URSP rule, to use the existing session or a newly established session to transmit a service of the first application. For details, refer to the description in S640. Details are not described herein again.

With reference to FIG. 8 to FIG. 10, the following specifically describes a corresponding URSP delivery process when the network device is an H-PCF, a V-PCF, or an ECS and the UE accesses a VPLMN.

FIG. 8 is a schematic interaction diagram of still another communication method according to an embodiment of this application. This embodiment may be applied to the roaming network architecture shown in FIG. 3 or FIG. 4.

S810: The H-PCF determines that a serving PLMN of the UE is the VPLMN.

A specific implementation of this step is not limited in this application. In a possible specific implementation, in a UE Policy Association Establishment/Modification process, an AMF sends an Npcf_UEPolicyControl Create/Update Request message to the H-PCF through the V-PCF, where the message may carry a VPLMN ID of the VPLMN accessed by the UE. After receiving the message forwarded by the V-PCF, the H-PCF determines, based on the VPLMN ID carried in the message, that the serving PLMN of the UE is the VPLMN.

S820: The H-PCF determines a first URSP based on the VPLMN ID of the UE.

It should be understood that the serving PLMN of the UE is the VPLMN, and the first USRP determined herein is a URSP corresponding to the VPLMN.

It should be further understood that the UE has accessed an HPLMN before accessing the VPLMN. Therefore, the URSP corresponding to the HPLMN may have been delivered to the UE before S820.

It can be learned from the foregoing that, both the requirement 1 and the requirement 2 can be met if URSPs corresponding to different PLMNs meet the following conditions: (1) A URSP corresponding to the HPLMN meets the following condition: (DNN, S-NSSAI) in a URSP rule corresponding to the HPLMN and the ECS is the same as (DNN, S-NSSAI) in a URSP rule corresponding to the HPLMN and an EAS. (2) The URSP (that is, the first URSP) corresponding to the VPLMN meets the following condition: (DNN, S-NSSAI) in a URSP rule corresponding to the VPLMN and the ECS is different from (DNN, S-NSSAI) in a URSP rule corresponding to the VPLMN and the EAS. (3) Subscription data of (DNN, S-NSSAI) corresponding to the VPLMN and the ECS corresponds to an HR roaming mode, and subscription data of (DNN, S-NSSAI) corresponding to the VPLMN and the EAS corresponds to an LBO roaming mode.

In this case, a possible URSP rule included in the URSP corresponding to the HPLMN is shown in Table 3.

**Table 3**

| URSP rule 1 | |
|---|---|
| Component | Value |
| Service descriptor | ECS |
| RSD→(DNN, S-NSSAI) | (DNN, S-NSSAI)₁ |
| | |

| URSP rule 2 | |
|---|---|
| Component | Value |
| Service descriptor | EAS |
| RSD→(DNN, S-NSSAI) | (DNN, S-NSSAI)₁ |

In this case, a possible URSP rule included in the URSP (that is, the first URSP) corresponding to the VPLMN is shown in Table 4.

**Table 4**

| URSP rule 3 | |
|---|---|
| Component | Value |
| Service descriptor | ECS |
| RSD→(DNN, S-NSSAI) | (DNN, S-NSSAI)₂ |
| | |

| URSP rule 4 | |
|---|---|
| Component | Value |
| Service descriptor | EAS |
| RSD→(DNN, S-NSSAI) | (DNN, S-NSSAI)₃ |

It should be noted that, if the URSP corresponding to the HPLMN has been delivered to the UE before the URSP corresponding to the VPLMN is delivered, when the H-PCF delivers the URSP corresponding to the VPLMN, (1) the URSP corresponding to the VPLMN may exclude the URSP rule corresponding to the ECS. If so, when the UE needs to access the ECS, the UE continues to use the URSP rule corresponding to the ECS included in the URSP corresponding to the HPLMN; and (2) a priority of the URSP rule corresponding to the VPLMN should be higher than that of a URSP rule with a same service descriptor in the URSP corresponding to the HPLMN. The foregoing two points are also applicable to other embodiments of this application.

S830: The H-PCF sends the first URSP to the UE.

Correspondingly, the UE receives the first URSP sent by the H-PCF.

As described above, in a conventional technology, there is no interface for direct communication between the UE and the H-PCF. That the H-PCF sends the first URSP to the UE only indicates that the H-PCF sends the first URSP to the UE through a path. The path is not specifically limited in this embodiment.

For example, as shown in FIG. 8, S830 may include the following steps.

S8301: The H-PCF sends the first URSP to the V-PCF.

Correspondingly, the V-PCF receives the first URSP sent by the H-PCF.

Optionally, when sending the first URSP, the H-PCF may further send indication information 1 (that is, the first indication information in the embodiment corresponding to FIG. 7), where the indication information 1 indicates that an effective range of the first URSP is a current serving PLMN (that is, a PLMN corresponding to the VPLMN ID).

S8302: The V-PCF forwards the first URSP to the UE.

Correspondingly, the UE receives the first URSP sent by the V-PCF.

Optionally, when sending the first URSP, the V-PCF may further send the indication information 1.

It should be noted that, if the LTE has internal logic 1, sending of the indication information 1 may be skipped in a process of forwarding the first URSP. If the UE does not have the internal logic 1 and the V-PCF does not have internal logic 2, the indication information 1 needs to be sent in the process of forwarding the first URSP. If the UE does not have the internal logic 1, but the V-PCF has the internal logic 2, the H-PCF may skip sending the indication information 1 to the V-PCF in the process of forwarding the first URSP, but the V-PCF needs to send the indication information 1 to the UE. The internal logic 1 herein means that when the UE accesses the VPLMN, an effective range of the received URSP is the current PLMN; and the internal logic 2 means that when the URSP received from the H-PCF is forwarded to the UE, the indication information 1 should be sent at the same time.

Optionally, the indication information 1 may be included in each URSP rule included in the first URSP. In this implementation, a possible URSP rule is shown in Table 5.

**Table 5**

| URSP rule | |
|---|---|
| Component | Value |
| Service descriptor | ECS |
| RSD→(DNN, S-NSSAI) | (DNN, S-NSSAI)₂ |
| Indication information 1 | / |
| | |

| URSP rule | |
|---|---|
| Component | Value |
| Service descriptor | EAS |
| RSD→(DNN, S-NSSAI) | (DNN, S-NSSAI)₃ |
| Indication information 1 | / |

Optionally, the indication information 1 may be excluded in the URSP rule, and is sent together with the associated URSP.

In a possible specific implementation, in S830, the H-PCF may first send the first URSP and the optional indication information 1 to the V-PCF via an Npcf_UEPolicyControl Create/Update Response message, the V-PCF sends the first URSP and the optional indication information 1 to the AMF via an Namf_Communication_N1N2MessageTransfer message, and then the AMF sends the first URSP and the optional indication information 1 to the UE via a NAS message.

S840: When the UE needs to access a first application, the UE determines that the current serving PLMN is the VPLMN. For example, the first application is an ECS or an EAS.

It should be understood that the LTE may determine, based on the indication information 1 or the internal logic 1 of the UE, that the received first URSP is a URSP corresponding to the current serving PLMN.

S850: The UE matches a URSP rule in the first URSP based on the first application and the serving PLMN, and determines to use an existing session or a newly established session to transmit a service of the first application.

Specifically, the UE matches a first URSP rule in the first URSP based on the first application. The service descriptor in the first URSP rule matches the first application. For example, in Table 4, if the first application is the ECS, a valid RSD in the first URSP rule (that is, the URSP rule 3) includes (DNN, S-NSSAI)₂; and if the first application is the EAS, a valid RSD in the first URSP rule (that is, the URSP rule 4) includes (DNN, S-NSSAI)₃. The UE matches an existing PDU session according to the first URSP rule, and determines, based on a matching result, to use the existing session or the newly established session to transmit the service of the first application.

In the foregoing embodiment, when the UE needs to access an edge server of the serving PLMN, the H-PCF determines and delivers the URSP corresponding to the serving PLMN of the UE, so that the UE may match a same service to different URSP rules in different PLMNs. In this way, both the requirement 1 and the requirement 2 can be met at the same time.

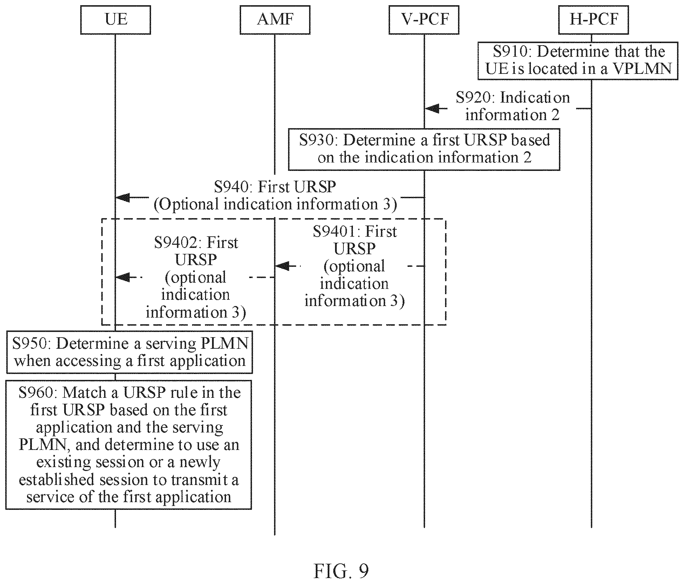

FIG. 9 is a schematic interaction diagram of still another communication method according to an embodiment of this application. This embodiment may be applied to the roaming network architecture shown in FIG. 3 or FIG. 4.

S910: An H-PCF determines that a serving PLMN of a UE is a VPLMN.

For details, refer to the description in S810. Details are not described herein again.

S920: The H-PCF sends indication information 2 to a V-PCF. The indication information 2 indicates the V-PCF to determine a URSP (that is, a first URSP) corresponding to the VPLMN and send the URSP to the UE.

Optionally, the indication information 2 includes a VPLMN ID.

In a possible specific implementation, in S910, in a LTE Policy Association Establishment/Modification process, the H-PCF sends the indication information 2 to the V-PCF via an Npcf_UEPolicyControl Create/Update Response message.

S930: The V-PCF determines the first URSP based on the indication information 2.

It can be learned from the foregoing that, both the requirement 1 and the requirement 2 can be met if URSPs corresponding to different PLMNs meet the following conditions: (1) A URSP corresponding to an HPLMN meets the following condition: (DNN, S-NSSAI) in a URSP rule corresponding to the HPLMN and an ECS is the same as (DNN, S-NSSAI) in a URSP rule corresponding to the HPLMN and an EAS. (2) The URSP (that is, the first URSP) corresponding to the VPLMN meets the following condition: (DNN, S-NSSAI) in a URSP rule corresponding to the VPLMN and the ECS is different from (DNN, S-NSSAI) in a URSP rule corresponding to the VPLMN and the EAS. (3) Subscription data of (DNN, S-NSSAI) corresponding to the VPLMN and the ECS corresponds to an HR roaming mode, and subscription data of (DNN, S-NSSAI) corresponding to the VPLMN and the EAS corresponds to an LBO roaming mode. For example, a possible URSP rule included in the URSP corresponding to the HPLMN is shown in Table 3, and a possible URSP rule included in the URSP (that is, the first URSP) corresponding to the VPLMN is shown in Table 4.

S940: The V-PCF forwards the first URSP to the UE.

Correspondingly, the UE receives the first URSP sent by the V-PCF.

Optionally, when sending the first URSP, the V-PCF may further send indication information 3 (that is, the first indication information in the embodiment corresponding to FIG. 7), where the indication information 3 indicates that an effective range of the first URSP is a current serving PLMN (that is, the VPLMN currently accessed by the UE).

As described above, there is no interface for direct communication between the UE and the V-PCF. That the V-PCF sends the first URSP to the UE only indicates that the V-PCF sends the first URSP to the UE through a path. The path is not specifically limited in this embodiment.

For example, as shown in FIG. 9, S940 may include the following steps.

S9401: The V-PCF sends the first URSP to an AMF.

Correspondingly, the AMF receives the first URSP sent by the V-PCF.

Optionally, when sending the first URSP, the V-PCF may further send the indication information 3.

S9402: The AMF forwards the first URSP to the UE.

Correspondingly, the UE receives the first URSP sent by the AMF.

Optionally, when sending the first URSP, the AMF may further send the indication information 3.

It should be noted that, if the UE has internal logic 1, sending of the indication information 3 may be skipped in a process of forwarding the first URSP. If the UE does not have the internal logic 1 and the AMF does not have internal logic 2, the indication information 3 needs to be sent in the process of forwarding the first URSP. If the UE does not have the internal logic 1, but the V-PCF has the internal logic 2, the V-PCF may skip sending the indication information 3 to the AMF in the process of forwarding the first URSP, but the AMF needs to send the indication information 3 to the UE. The internal logic 1 herein means that when the UE accesses the VPLMN, an effective range of the received URSP is the current PLMN; and the internal logic 2 means that when the URSP received from the V-PCF is forwarded to the UE, the indication information 3 should be sent at the same time.

In a possible specific implementation, in S940, the V-PCF may first send the first URSP and the optional indication information 3 to the AMF via an Namf_Communication_N1N2MessageTransfer message, and then the AMF sends the first URSP and the optional indication information 3 to the UE via a NAS message.

The indication information 3 and the indication information 1 have a same function, and an only difference lies in that source network elements for sending the indication information 3 and the indication information 1 are different. For the description of the indication information 3, refer to the description of the indication information 1. Details are not described herein again.

For S950 and S960, refer to descriptions in S840 and S850. Details are not described herein again.

In the foregoing embodiment, when the UE accesses an edge server of the VPLMN, the H-PCF indicates the V-PCF to determine and deliver the URSP corresponding to the VPLMN, so that the UE may match a same service to different URSP rules in different PLMNs. In this way, both the requirement 1 and the requirement 2 can be met at the same time.

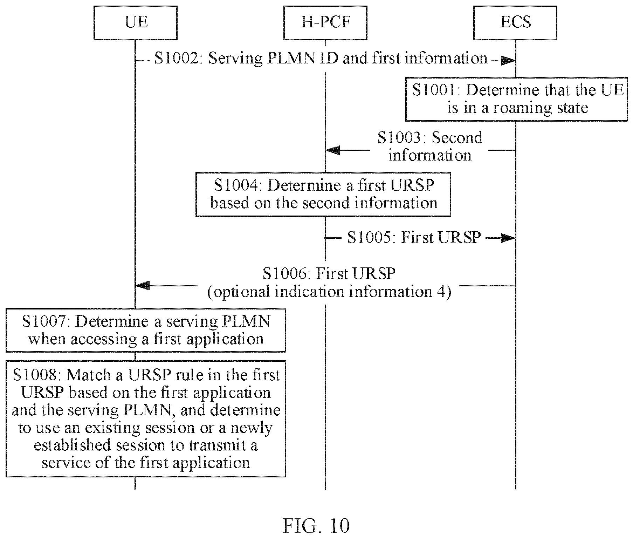

FIG. 10 is a schematic interaction diagram of still another communication method according to an embodiment of this application. This embodiment may be applied to the roaming network architecture shown in FIG. 4 and the SA WG6 edge computing network architecture shown in FIG. 5. In a scenario of this embodiment, it is assumed that a UE has established a connection with an ECS when accessing a VPLMN. When sensing that the UE accesses the VPLMN, the ECS obtains a URSP (that is, a first URSP) corresponding to the VPLMN, and sends the URSP to the UE.

S1001: The ECS determines that the UE is in a roaming state, that is, a serving PLMN of the UE is the VPLMN.

Optionally, S1001 is preceded by S1002: The UE sends a serving PLMN ID (that is, a VPLMN ID of the VPLMN accessed by the UE) of the UE and first information to the ECS, where the first information includes an HPLMN ID and/or second indication information, and the second indication information indicates that the UE is in the roaming state.

Correspondingly, the ECS receives the serving PLMN ID and the first information that are sent by the UE.

In an implementation, if the ECS learns of the HPLMN ID and the serving PLMN ID of the UE, the ECS compares whether the HPLMN ID and the serving PLMN ID are the same, and if the HPLMN ID and the serving PLMN ID are different, the UE is in the roaming state.

In another implementation, if the UE sends the second indication information to the ECS, the ECS may directly determine, based on the second indication information, that the UE is in the roaming state.

When the ECS determines that the UE is in the roaming state, the ECS may locally configure the first URSP, or may obtain the first URSP (that is, the URSP corresponding to the VPLMN currently accessed by the UE) from the H-PCF. If the ECS locally configures the first URSP, S1003 to S1005 are skipped. If the ECS obtains the first URSP from the H-PCF, S1003 to S1005 are performed.

S1003: The ECS sends second information to the H-PCF, where the second information includes the serving PLMN ID (that is, the VPLMN ID) of the UE and a first request message, the first request message is used to request the H-PCF to send the first URSP to the ECS, and the first URSP is the URSP corresponding to the serving PLMN ID (that is, the VPLMN ID of the VPLMN accessed by the UE) of the UE.

S1004: The H-PCF determines the first URSP based on the second information. For this step, refer to the specific description in S820 about how the H-PCF determines the first URSP based on the VPLMN ID of the UE. Details are not described herein again.

In an implementation, if the H-PCF has internal logic, the second information may exclude the first request information, and the H-PCF may determine the first URSP based on the serving PLMN ID of the UE in the received second information. The internal logic herein means that the H-PCF sends the first URSP to the ECS after receiving the serving PLMN ID of the UE.

S1005: The H-PCF sends the first URSP to the ECS.

In a possible specific implementation, the H-PCF sends the first URSP to the ECS via an Npcf_Policy Authorization Notify message.

S1006: The ECS sends the first URSP to the UE.

Optionally, when sending the first URSP to the UE, the ECS may further send indication information 4 (that is, the first indication information in the embodiment corresponding to FIG. 7), where the indication information 4 indicates that an effective range of the first URSP is a current serving PLMN.

Optionally, if the UE has internal logic, when the UE accesses the VPLMN, and the effective range of the received URSP is the current PLMN, sending of the indication information 4 may be skipped in this step.

In a possible specific implementation, in a Service Provisioning procedure, the ECS sends the first URSP to the UE via a Service Provisioning Response message, and may send the indication information 4.

The indication information 4 and the indication information 1 have a same function, and an only difference lies in that source network elements for sending the indication information 4 and the indication information 1 are different. For the description of the indication information 4, refer to the description of the indication information 1. Details are not described herein again.

For S1007 and S1008, refer to descriptions in S840 and S850. Details are not described herein again.

In the foregoing embodiment, after accessing the ECS through the VPLMN, the UE sends the serving PLMN ID and the HPLMN ID or an identifier indicating that the UE is in the roaming state to the ECS. When the UE is in the roaming state, the ECS sends, to the UE, the URSP that corresponds to the VPLMN and that is locally configured or requested from the H-PCF, so that the UE matches a same service to different URSP rules in different PLMNs. In this way, both the requirement 1 and the requirement 2 can be met at the same time.

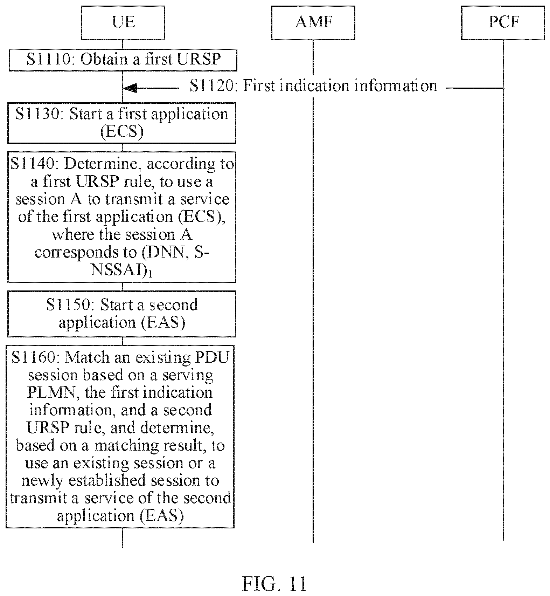

The foregoing provides a method in which a network device delivers a URSP to the UE at a PLMN granularity, so as to meet the requirement 1 and the requirement 2. With reference to FIG. 11 to FIG. 13, the following provides other communication methods that can meet the requirement 1 and the requirement 2. These methods still use an existing mechanism in which a LTE uses a same URSP in different PLMNs. For specific steps, refer to descriptions in the following embodiments.

FIG. 11 is a schematic interaction diagram of still another communication method according to an embodiment of this application. This embodiment may be applied to the non-roaming network architecture shown in FIG. 2.

S1110: A UE obtains a first URSP. In this embodiment, the first URSP includes a first URSP rule and a second URSP rule, where the first URSP rule includes (DNN, S-NSSAI) that is matched when the UE accesses a first application, the second rule includes (DNN, S-NSSAI) that is matched when the LTE accesses a second application, and (DNN, S-NSSAI) corresponding to the first application is different from (DNN, S-NSSAI) corresponding to the second application.

It should be understood that, in a process of accessing an ECS and an EAS, the UE needs to first access the ECS and then access the EAS. For ease of description, in this embodiment, an example in which the first application is an ECS service and the second application is an EAS service is used for description. The ECS corresponds to (DNN, S-NSSAI)₁, and the EAS corresponds to (DNN, S-NSSAI)₂. It should be noted that subscription data of (DNN, S-NSSAI)₁ corresponds to an HR roaming mode, and subscription data of (DNN, S-NSSAI)₂ corresponds to an LBO roaming mode. Therefore, the requirement 2 is met.

Optionally, that the UE obtains the first URSP may be that the UE receives the first URSP from a PCF.

Optionally, that the UE obtains the first URSP may alternatively be that the UE locally configures the first URSP.

S1120: The PCF sends first indication information to the UE, where when the first indication information indicates that the UE is located in an HPLMN, (DNN, S-NSSAI)₁ and (DNN, S-NSSAI)₂ are considered as a same parameter when matching an existing session.

It should be understood that, that (DNN, S-NSSAI)₁ and (DNN, S-NSSAI)₂ are considered as a same parameter when matching an existing session may be understood as that a URSP rule (that is, the first URSP rule) including (DNN, S-NSSAI)₁ and a URSP rule (that is, the second URSP rule) including (DNN, S-NSSAI)₂ may match a same session when other RSD components except (DNN, S-NSSAI) are the same. For example, if the UE has accessed the ECS through a PDU session A, and (DNN, S-NSSAI) of the session A is (DNN, S-NSSAI)₁, the UE may reuse the session A to access the EAS when the URSP rule including (DNN, S-NSSAI)₂ is the same as another RSD component of the session A except (DNN, S-NSSAI).

Optionally, the first indication information may be sent included in a message in which the PCF sends the first URSP to the UE. It can be learned from the foregoing that, in a conventional technology, there is no direct communication interface between the UE and the PCF. In a possible specific implementation, in a UCU process, the PCF sends the first indication information to an AMF via an Namf_Communication_N1N2MessageTransfer message, and then the AMF sends the first indication information to the UE via a NAS message.

Optionally, the first indication information may alternatively be sent by using a separate message or an information element.

Optionally, the first indication information may alternatively be included in a URSP rule in the first URSP. In this implementation, a possible URSP rule is shown in Table 6.

**Table 6**

| URSP rule 1 | |
|---|---|
| Component | Value |
| Service descriptor | ECS |
| RSD→(DNN, S-NSSAI) | (DNN, S-NSSAI)₁ |
| First indication information | / |

| URSP rule 2 | |
|---|---|
| Component | Value |
| Service descriptor | EAS |
| RSD→(DNN, S-NSSAI) | (DNN, S-NSSAI)₂ |
| First indication information | / |

S1130: The UE starts the first application (ECS). The UE matches the first URSP rule in the first URSP based on the first application (ECS).

S1140: The UE determines, according to the first URSP rule, to use the session A to transmit a service of the first application (ECS), where the session A corresponds to (DNN, S-NSSAI)₁.

It should be understood that the session A may be a newly established session, or may be an existing session.

S1150: The LTE starts the second application (EAS). The UE matches the second URSP rule in the first URSP based on the second application (EAS).

S1160: The UE matches an existing PDU session based on a serving PLMN, the first indication information, and the second URSP rule, and determines, based on a matching result, to use the existing session or the newly established session to transmit a service of the second application (EAS).
(1) When the serving PLMN of the LTE is the HPLMN, the first indication information is valid, and the UE matches the existing PDU session according to the second URSP rule and the first indication information.
   As described above, the UE has accessed the ECS through the PDU session A, and the session A corresponds to (DNN, S-NSSAI)₁. When the UE needs to access the EAS, the UE first selects an appropriate URSP rule (that is, the second rule), and the URSP rule is set as the URSP rule 2 shown in Table 6. Then, the UE senses that the UE currently accesses the HPLMN. Therefore, the first indication information is valid. When the existing session is matched, the URSP rule 2 including (DNN, S-NSSAI)₂ and the existing session A including (DNN, S-NSSAI)₁ may be successfully matched when other components are the same. Therefore, the UE may reuse the existing session A to access the EAS. If the matching fails, the UE still needs to initiate a session establishment process to request establishment of a PDU session whose corresponding (DNN, S-NSSAI) is (DNN, S-NSSAI)₂.
(2) When the serving PLMN of the UE is a VPLMN, the first indication information is invalid, and a session matching and establishment process is performed according to the conventional technology.

In the foregoing embodiment, the PCF sends the first indication information to the UE, to indicate that when the UE accesses the HPLMN, (DNN, S-NSSAI)₁ corresponding to the ECS and (DNN, S-NSSAI)₂ corresponding to the EAS are considered as the same (DNN, S-NSSAI) when matching the existing session, and may match the same session, so as to meet the requirement 1. When the UE is located in the VPLMN, the first indication information is invalid. Therefore, the same session cannot be matched because (DNN, S-NSSAI)₁ corresponding to the ECS is different from (DNN, S-NSSAI)₂ corresponding to the EAS. In this way, the requirement 2 is met.

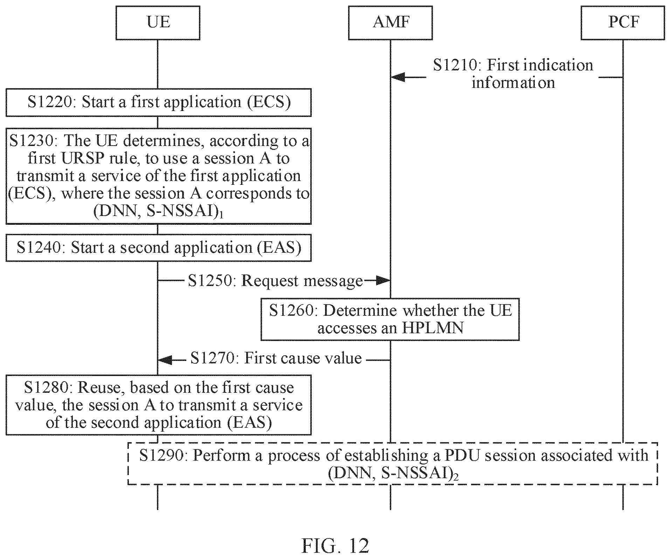

FIG. 12 is a schematic interaction diagram of still another communication method according to an embodiment of this application. This embodiment may be applied to the non-roaming network architecture shown in FIG. 2. Same as a prerequisite of the embodiment corresponding to FIG. 11, in this embodiment, it is assumed that a first URSP obtained by a UE includes a first URSP rule and a second URSP rule, where the first URSP rule includes (DNN, S-NSSAI)₁ matched when the UE accesses a first application, the second rule includes (DNN, S-NSSAI)₂ matched when the UE accesses a second application, and (DNN, S-NSSAI)₁ and (DNN, S-NSSAI)₂ are different. In this way, the requirement 2 is met. For ease of description, in this embodiment, an example in which the first application is an ECS service and the second application is an EAS service is used for description.

S1210: A PCF sends first indication information to an AMF, where when the first indication information indicates that the UE is located in an HPLMN, (DNN, S-NSSAI)₁ and (DNN, S-NSSAI)₂ are considered as a same parameter when matching an existing session.

Correspondingly, the AMF receives the first indication information from the PCF and stores the first indication information.

In a possible specific implementation, in a UCU process, the PCF sends the first indication information to the AMF via an Namf_Communication_N1N2MessageTransfer message.

In another possible specific implementation, the first indication information may further be included in a URSP. In this implementation, a possible URSP rule is shown in Table 6.

S 1220: The UE starts the first application (ECS). The UE matches the first URSP rule in the first URSP based on the first application (ECS).

S 1230: The UE determines, according to the first URSP rule, to use a session A to transmit a service of the first application (ECS), where the session A corresponds to (DNN, S-NSSAI)₁.

It should be understood that the session A may be a newly established session, or may be the existing session.

S 1240: The UE starts the second application (EAS). The UE matches the second URSP rule in the first URSP based on the second application (EAS).

The UE matches the existing session based on a serving PLMN and the second URSP rule, and determines, based on a matching result, to use the existing session or the newly established session to transmit a service of the second application (EAS). If there is no existing session that is associated with the UE and whose (DNN, S-NSSAI) is (DNN, S-NSSAI)₂ in this case, the UE performs S 1250. In this case, because the UE has not sensed that the UE is located in the HPLMN, (DNN, S-NSSAI)₁ and (DNN, S-NSSAI)2 are considered as the same (DNN, S-NSSAI) when matching the existing session.

S1250: The UE sends a request message to the AMF, where the request message includes (DNN, S-NSSAI)₂, and the request message is used to request to establish a session corresponding to (DNN, S-NSSAI)₂.

Correspondingly, the AMF receives the request message.

It should be noted that, for brevity, in this embodiment, it is assumed that in the request message sent by the UE to the AMF, all parameters (such as an SSC mode and an access type) in other RSDs included in the request message are the same as those in the session A except that (DNN, S-NSSAI) corresponding to the session A may be different.

S 1260: The AMF determines whether the UE accesses the HPLMN.

In a possible specific implementation, that the AMF determines whether the UE accesses the HPLMN may be that the AMF obtains, from subscription data, information about the HPLMN to which the LTE subscribes. If the information is consistent with information about a PLMN of the AMF, the AMF determines that the UE accesses the HPLMN; otherwise, the AMF determines that the UE accesses a VPLMN.
(1) If the LTE accesses the VPLMN, the first indication information is invalid, and S 1290 is performed.
(2) If the UE accesses the HPLMN, the AMF further determines whether an existing PDU session associated with (DNN, S-NSSAI)₁ exists, because the first indication information indicates that (DNN, S-NSSAI)₁ and (DNN, S-NSSAI)₂ are considered as the same (DNN, S-NSSAI) when matching the existing session in the HPLMN. If the foregoing session does not exist, remaining steps in this embodiment are not performed, and S 1290 is performed. If the existing PDU session associated with (DNN, S-NSSAI)₁ exists, the AMF determines to reject the session establishment request message, and performs S1270 and S 1280. It can be learned from S 1230 that, in this embodiment, if the session A associated with (DNN, S-NSSAI)₁ exists, S 1270 and S 1280 may continue to be performed.

S 1270: The AMF sends a first cause value to the UE, where the first cause value indicates the UE to reuse the session A to transmit the service of the second application (EAS).

Correspondingly, the UE receives the first cause value from the AMF.

Optionally, the first cause value includes second indication information and/or an ID of the session A. Functions of the second indication information are as follows: (1) Inform that when the UE is located in the HPLMN, (DNN, S-NSSAI) corresponding to the ECS and (DNN, S-NSSAI) corresponding to the EAS are considered as the same (DNN, S-NSSAI), and may match a same session. (2) Indicate the UE to re-match the existing session based on (1). A function of the ID of the session A is to indicate the UE to reuse the session A corresponding to the ID to access the second application (EAS).

In a possible specific implementation, the AMF sends the first cause value to the UE via a NAS message.

S 1280: The UE reuses, based on the first cause value, the session A to transmit the service of the second application (EAS).

Optionally, if the first cause value is the second indication information, the UE stores the second indication information, and re-matches the existing session based on the function (1) of the second indication information. Because there is an existing PDU session associated with (DNN, S-NSSAI)₁, the UE may match, based on the second indication information, the existing PDU session associated with (DNN, S-NSSAI)₁, and may consider the second indication information in subsequent existing session matching performed in the HPLMN.

Optionally, if the first cause value is an ID of the existing PDU session, the UE may skip existing session matching, and directly access the EAS through the ID of the session A.

Optionally, if the first cause value includes the second indication information and the ID of the session A, the UE may perform either of the foregoing two actions, or may store the second indication information, and access the EAS through the ID of the session A.

S1290: The UE continues to perform a remaining part of a process of establishing a PDU session associated with (DNN, S-NSSAI)₂.

In the foregoing embodiment, the PCF sends the first indication information to the AMF, to inform the AMF that when the LTE accesses the HPLMN, (DNN, S-NSSAI)₁ corresponding to the ECS and (DNN, S-NSSAI)₂ corresponding to the EAS are considered as the same (DNN, S-NSSAI). After the AMF receives, from the UE, a session establishment request that includes (DNN, S-NSSAI)₂, if the AMF determines that the UE is located in the HPLMN, the first indication information takes effect, and there is an existing session associated with (DNN, S-NSSAI)₁, the AMF returns the first cause value to the UE, to indicate the UE to re-match a session or use the existing session, so as to meet the requirement 1. When the UE is located in the VPLMN, the first indication information is invalid, and a session associated with (DNN, S-NSSAI)₂ continues to be established. In this way, the requirement 2 is met.

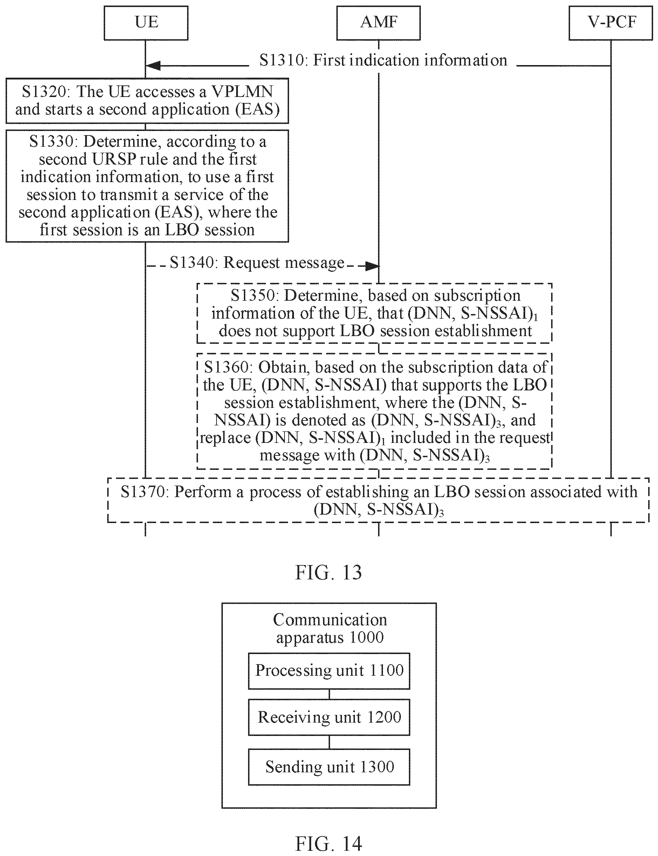

FIG. 13 is a schematic interaction diagram of still another communication method according to an embodiment of this application. This embodiment may be applied to the roaming network architecture shown in FIG. 3 or FIG. 4. Different from prerequisites of embodiments in FIG. 11 and FIG. 12, in this embodiment, it is assumed that a first URSP obtained by a UE includes a first URSP rule and a second URSP rule, where the first URSP rule includes (DNN, S-NSSAI) that is matched when the UE accesses a first application, the second rule includes (DNN, S-NSSAI) that is matched when the UE accesses a second application (EAS), and (DNN, S-NSSAI) corresponding to the first application is the same as (DNN, S-NSSAI) corresponding to the second application. In this embodiment, it is assumed that the same (DNN, S-NSSAI) is (DNN, S-NSSAI)₁, and subscription data of (DNN, S-NSSAI)₁ indicates the LTE to use an HR session, so as to meet the requirement 1. For ease of description, in this embodiment, an example in which the first application is an ECS service and the second application is an EAS service is used for description.

It should be understood that, in this embodiment, access of the UE to an HPLMN is performed according to an existing process. A related process for the UE to access a VPLMN is specifically provided herein.

S1310: A V-PCF sends first indication information to the LTE, where the first indication information indicates, when the UE is located in the VPLMN, the LTE to use an LBO session to access the second application (EAS) deployed in the VPLMN.

Correspondingly, the UE receives the first indication information from the V-PCF.

Optionally, the first indication information may be simultaneously sent in a message in which the PCF sends the first URSP to the UE. It should be understood that the PCF herein may be understood as the PCF in the architecture in FIG. 2 when the UE is located in the HPLMN.

Optionally, the first indication information may further be included in the first URSP. In this implementation, a possible URSP rule is shown in Table 7.

**Table 7**

| URSP rule | |
|---|---|
| Component | Value |
| Service descriptor | EAS |
| RSD→(DNN, S-NSSAI) | (DNN, S-NSSAI)₂ |
| First indication information | / |

In a possible specific implementation of this step, in a UCU process, the V-PCF sends a URSP rule to an AMF via an Namf_Communication_N1N2MessageTransfer message, and then the AMF sends the URSP rule to the UE via a NAS message.

S1320: The UE accesses the VPLMN and starts the second application (EAS).

S1330: The UE determines, according to the second URSP rule and the first indication information, to use a first session to transmit a service of the second application (EAS), where the first session is the LBO session, and it is assumed herein that the first session corresponds to (DNN, S-NSSAI)₃.

In a specific example, it is assumed that the first indication information is included in a URSP, and the URSP rule in the UE is shown in Table 8. The UE has established, according to the first URSP rule corresponding to an ECS, an HR session for accessing the ECS, where the HR session (denoted as a session C) corresponds to (DNN, S-NSSAI)₁, and in storage of the UE, a context associated with the session C does not include the first indication information. When the UE needs to access the EAS deployed in the VPLMN, the UE matches an existing session based on (DNN, S-NSSAI)₁ corresponding to the EAS in the second URSP rule. Because the second URSP rule corresponding to the EAS includes the first indication information, the session C cannot be matched. Therefore, the UE needs to use the LBO session to access the second application (EAS).

**Table 8**

| First URSP rule | |
|---|---|
| Component | Value |
| Service descriptor | ECS |
| RSD→(DNN, S-NSSAI) | (DNN, S-NSSAI)₁ |
| | |

| Second URSP rule | |
|---|---|
| Component | Value |
| Service descriptor | EAS |
| RSD→(DNN, S-NSSAI) | (DNN, S-NSSAI)₁ |
| First indication information | / |

It can be learned from the foregoing that when the UE is located in the VPLMN, the UE uses, based on the subscription information, the HR session to access the first application (ECS), and uses, based on the first indication information, the LBO session to access the second application (EAS). Therefore, when the UE is located in the VPLMN, the UE accesses the ECS and the EAS by using different sessions, so as to meet the requirement 2.

Optionally, before the LTE determines to use the first session to transmit the service of the second application (EAS), the method further includes S1340 to S1370, because the UE does not match the existing session.

S1340: The UE sends a request message to the AMF, where the request message includes (DNN, S-NSSAI)₁ and second indication information, and the second indication information indicates to establish an LBO session associated with (DNN, S-NSSAI)₁.

Correspondingly, the AMF receives the request message.

In an implementation, the request message may be included in a NAS message.

S1350: The AMF determines, based on the subscription information of the UE, that (DNN, S-NSSAI)₁ does not support LBO session establishment.

It should be understood that, whether a session supports the LBO roaming mode is determined by (DNN, S-NSSAI) of the session in the subscription data of the UE. In other words, in a session establishment process, after receiving the request message from the UE, the AMF in the VPLMN learns, based on (DNN, S-NSSAI)₁ included in the request message and the subscription data of the UE, whether the UE is allowed to establish the LBO session. It can be learned that the subscription data of (DNN, S-NSSAI)₁ in this application indicates that the LBO session establishment is not allowed in a roaming scenario, and S1360 is performed.

S1360: The AMF obtains, based on the subscription data of the UE, (DNN, S-NSSAI) that supports the LBO session establishment, where (DNN, S-NSSAI) is denoted as (DNN, S-NSSAI)₃, and replaces (DNN, S-NSSAI)₁ included in the request message sent by the UE with (DNN, S-NSSAI)₃.

It should be further understood that (DNN, S-NSSAI)₃ and (DNN, S-NSSAI)₁ are different. Specifically, both the DNN and the S-NSSAI in (DNN, S-NSSAI)₃ may be different from those in (DNN, S-NSSAI)₁, or either of the DNN and the S-NSSAI in (DNN, S-NSSAI)₃ may be different from that in (DNN, S-NSSAI)₁, but both the DNN and the S-NSSAI in (DNN, S-NSSAI)₃ may not be the same as those in (DNN, S-NSSAI)₁.

S1370: Continue to perform the process of establishing the LBO session (that is, the first session) associated with (DNN, S-NSSAI)₃.

It should be noted that after the LBO session (that is, the first session) is established, the UE should include the first indication information in a context corresponding to the associated session.

In the foregoing embodiment, the V-PCF sends the first indication information to the UE, to indicate the UE to use the LBO session to access the EAS deployed in the VPLMN. The first indication information is valid within a range of the VPLMN. When the UE needs to access the EAS, the UE needs to use the first indication information as one of criteria for matching a URSP rule. When a new session needs to be established for the EAS, the LTE includes the second indication information in a session establishment request, to indicate to establish the LBO session. After receiving the request, the AMF determines, based on the subscription data of the UE, whether (DNN, S-NSSAI) in the request can support establishment of the LBO session. If the LBO session cannot be established, the AMF modifies (DNN, S-NSSAI) to continue to establish the LBO session, so as to meet a scenario corresponding to the question 2. When the UE is located in the HPLMN, the first indication information is invalid, and the UE may access the ECS and the EAS by using a same session, so as to meet a scenario corresponding to the question 1.

The foregoing describes in detail the communication method according to this application with reference to FIG. 6 to FIG. 13. The following describes a communication apparatus according to this application.

FIG. 14 is a schematic block diagram of a communication apparatus 1000 according to this application. As shown in FIG. 14, the communication apparatus 1000 includes a processing unit 1100.

The processing unit 1100 is configured to determine a first UE route selection policy URSP, where the first URSP includes at least one first URSP rule, the first URSP rule corresponds to a home public land mobile network HPLMN or a visited public land mobile network VPLMN of a terminal device, and the first URSP is used to determine whether a first application is capable of associating with an existing session. The processing unit 1100 is further configured to start the first application. The processing unit 1100 is further configured to determine one of the at least one first URSP rule as a second URSP rule based on a serving PLMN and the first application, where a PLMN corresponding to the second URSP rule is the same as the serving PLMN. The processing unit 1100 is further configured to determine, according to the second URSP rule, to use the existing session or a newly established session to transmit a service of the first application.

Optionally, in an embodiment, the first URSP rule includes a PLMN descriptor, and the PLMN descriptor indicates information about a PLMN corresponding to the first URSP rule.

Optionally, the communication apparatus 1000 further includes a receiving unit 1200 configured to perform a receiving action.

Optionally, in another embodiment, the receiving unit 1200 is configured to receive the first URSP from a policy control network element.

Optionally, in another embodiment, the processing unit 1100 is configured to locally configure the first URSP.

Optionally, the communication apparatus 1000 further includes a sending unit 1300 configured to perform a sending action.

In some other solutions, the units of the communication apparatus 1000 are further configured to perform the following steps and/or operations.

The receiving unit 1200 is configured to receive a first UE route selection policy URSP from a network device, where the first URSP includes at least one URSP rule, the first URSP is a URSP corresponding to a serving public land mobile network PLMN of a terminal device, the serving PLMN is a visited public land mobile network VPLMN, and the first URSP is used to determine whether a first application is capable of associating with an existing session. The processing unit 1100 is configured to start the first application. The processing unit 1100 is further configured to determine one of the at least one URSP rule as a first URSP rule based on the serving PLMN and the first application. The processing unit 1100 is further configured to determine, according to the first URSP rule, to use the existing session or a newly established session to transmit a service of the first application.

Optionally, in an embodiment, the receiving unit 1200 is further configured to receive first indication information from the network device, where the first indication information indicates that the first URSP corresponds to the VPLMN.

Optionally, in another embodiment, the network device is any one of a home policy control network element, a visited policy control network element, or an edge configuration server ECS.

Optionally, in another embodiment, the network device is an ECS, and the sending unit 1300 is configured to send an identifier of the serving PLMN and first information to the network device, where the first information includes an identifier of an HPLMN of the terminal device and/or second indication information, and the second indication information indicates that the terminal device is in a roaming state.

In some other solutions, the units of the communication apparatus 1000 are further configured to perform the following steps and/or operations.

The processing unit 1100 is configured to determine a first UE route selection policy URSP, where the first URSP includes a first URSP rule and a second URSP rule, the first URSP rule includes a first parameter combination, the first parameter combination is a data network name DNN and single network slice selection assistance information S-NSSAI that are matched when a terminal device accesses a first application, the second URSP rule includes a second parameter combination, the second parameter combination is a DNN and S-NSSAI that are matched when the terminal device accesses a second application, and the first parameter combination and the second parameter combination are different. The receiving unit 1200 is configured to receive first indication information from a policy control network element, where the first indication information indicates that when a serving public land mobile network PLMN of the terminal device is a home public land mobile network HPLMN, the first parameter combination and the second parameter combination are considered as a same parameter combination. The processing unit 1100 is further configured to start the first application. The processing unit 1100 is further configured to determine, according to the first URSP rule, to use a first session to transmit a service of the first application, where the first session corresponds to the first parameter combination. The processing unit 1100 is further configured to start the second application. The processing unit 1100 is further configured to determine that the serving PLMN of the terminal device is the HPLMN. The processing unit 1100 is further configured to determine, according to the second URSP rule and the first indication information, that the processing unit 1100 is successfully matched with the first session. The processing unit 1100 is further configured to reuse the first session to transmit a service of the second application.

Optionally, in an embodiment, the first application corresponds to an edge configuration server ECS, and the second application corresponds to an edge application server EAS.

In some other solutions, the units of the communication apparatus 1000 are further configured to perform the following steps and/or operations.

The processing unit 1100 is configured to determine a first UE route selection policy URSP, where the first URSP includes a first URSP rule and a second URSP rule, the first URSP rule includes a first parameter combination, the first parameter combination is a data network name DNN and single network slice selection assistance information S-NSSAI that are matched when a terminal device accesses a first application, the second URSP rule includes a second parameter combination, the second parameter combination is a DNN and S-NSSAI that are matched when the terminal device accesses a second application, and the first parameter combination and the second parameter combination are different. The processing unit 1100 is further configured to start the first application. The processing unit 1100 is further configured to determine, according to the first URSP rule, to use a first session to transmit a service of the first application, where the first session corresponds to the first parameter combination. The processing unit 1100 is further configured to access a home public land mobile network HPLMN. The processing unit 1100 is further configured to start the second application. The sending unit 1300 is configured to send a request message to an access and mobility management network element, where the request message includes the second parameter combination, and the request message is used to request to establish a session corresponding to the second parameter combination. The receiving unit 1200 is configured to receive a first cause value from the access and mobility management network element, where the first cause value indicates the terminal device to reuse the first session. The processing unit 1100 is further configured to reuse, based on the first cause value, the first session to transmit a service of the second application.

Optionally, in an embodiment, the first cause value includes second indication information, and the second indication information indicates that when the terminal device accesses the HPLMN, the first parameter combination and the second parameter combination are considered as a same parameter combination.

Optionally, in another embodiment, the first cause value includes a first session identifier, and the first session identifier indicates the terminal device to reuse the first session.

Optionally, in another embodiment, the first application corresponds to an edge configuration server ECS, and the second application corresponds to an edge application server EAS.

In some other solutions, the units of the communication apparatus 1000 are further configured to perform the following steps and/or operations.

The processing unit 1100 is configured to determine a first UE route selection policy URSP, where the first URSP includes a first URSP rule and a second URSP rule, the first URSP rule includes a first parameter combination, the first parameter combination is a data network name DNN and single network slice selection assistance information S-NSSAI that are matched when a terminal device accesses a first application, the second URSP rule includes a second parameter combination, the second parameter combination is a DNN and S-NSSAI that are matched when the terminal device accesses a second application, the first parameter combination and the second parameter combination are the same, and subscription data of the first parameter combination and the second parameter combination indicates the terminal device to use a home routed HR session to access the first application or the second application when the terminal device accesses a visited public land mobile network VPLMN. The receiving unit 1200 is configured to receive first indication information from a visited policy control network element, where the first indication information indicates the terminal device to use a local breakout LBO session to access the second application when the terminal device is located in the VPLMN. The processing unit 1100 is further configured to access the VPLMN. The processing unit 1100 is further configured to start the second application. The processing unit 1100 is further configured to determine, according to the second URSP rule and the first indication information, to use a first session to transmit a service of the second application, where the first session is associated with an LBO session of a third parameter combination, and the third parameter combination includes a third DNN and third S-NSSAI.

Optionally, in another embodiment, the sending unit 1300 is configured to send a request message to an access and mobility management network element, where the request message includes the second parameter combination and second indication information, and the second indication information indicates to establish an LBO session corresponding to the second parameter combination.

Optionally, in another embodiment, the first application corresponds to an edge configuration server ECS, and the second application corresponds to an edge application server EAS.

Optionally, the receiving unit 1200 and the sending unit 1300 may alternatively be integrated into a transceiver unit, and the transceiver unit has both a receiving function and a sending function. This is not limited herein.

In an implementation, the communication apparatus 1000 may be the terminal device in the method embodiments corresponding to FIG. 6 to FIG. 13. In this implementation, the sending unit 1300 may be a transmitter, and the receiving unit 1200 may be a receiver. Alternatively, the receiver and the transmitter may be integrated into a transceiver. The processing unit 1100 may be a processing apparatus.

In another implementation, the communication apparatus 1000 may be a chip or an integrated circuit installed in the terminal device. In this implementation, the sending unit 1300 and the receiving unit 1200 may be communication interfaces or interface circuits. For example, the sending unit 1300 is an output interface or an output circuit, the receiving unit 1200 is an input interface or an input circuit, and the processing unit 1100 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 1000 performs operations and/or processing performed by the terminal device in the method embodiments. Optionally, the processing apparatus may include only the processor, and the memory configured to store the computer program is located outside the processing apparatus. The processor is connected to the memory through a circuit/wire, to read and execute the computer program stored in the memory. For another example, the processing apparatus may be a chip or an integrated circuit.

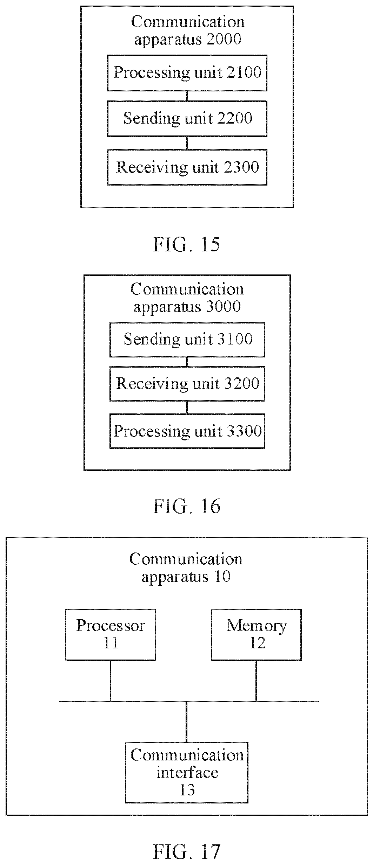

FIG. 15 is a schematic block diagram of a communication apparatus 2000 according to this application. As shown in FIG. 15, the communication apparatus 2000 includes a processing unit 2100 and a sending unit 2200.

The processing unit 2100 is configured to determine a first UE route selection policy URSP, where the first URSP includes at least one URSP rule, the first URSP is a URSP corresponding to a serving public land mobile network PLMN of a terminal device, the serving PLMN is a visited public land mobile network VPLMN, and the first URSP is used to determine whether a first application is capable of associating with an existing session. The sending unit 2200 is configured to send the first URSP to the terminal device.

Optionally, in an embodiment, the sending unit 2200 is further configured to send first indication information to the terminal device, where the first indication information indicates that the first URSP corresponds to the VPLMN.

Optionally, the communication apparatus 2000 further includes a receiving unit 2300 configured to perform a receiving action.

Optionally, in another embodiment, a network device is an edge configuration server ECS, and the receiving unit 2300 is configured to receive an identifier of the serving PLMN and first information from the terminal device, where the first information includes an identifier of a home public land mobile network HPLMN of the terminal device and/or second indication information, and the second indication information indicates that the terminal device is in a roaming state. The processing unit 2100 is further configured to determine, based on the identifier of the serving PLMN and the identifier of the HPLMN, that the terminal device is in the roaming state, or determine, based on the second indication information, that the terminal device is in the roaming state.

Optionally, in another embodiment, the sending unit 2200 is further configured to send second information to a home policy control network element, where the second information includes the identifier of the serving PLMN and a first request message, and the first request message is used to request the home policy control network element to send the first URSP to the network device. The receiving unit 2300 is further configured to receive the first URSP from the home policy control network element.

Optionally, in another embodiment, the network device is a visited policy control network element, and the receiving unit 2300 is further configured to receive third indication information from the home policy control network element, where the third indication information indicates the network device to send the first URSP to the terminal device. The processing unit 2100 is further configured to determine the first URSP based on the third indication information.

Optionally, in another embodiment, the network device is a home policy control network element.

Optionally, the sending unit 2200 and the receiving unit 2300 may alternatively be integrated into a transceiver unit, and the transceiver unit has both a receiving function and a sending function. This is not limited herein.

In an implementation, the communication apparatus 2000 may be the network device in the method embodiments corresponding to FIG. 7 to FIG. 10. For example, the network device may be any one of an H-PCF, a V-PCF, and an ECS. In this implementation, the sending unit 2200 may be a transmitter, and the receiving unit 2300 may be a receiver. Alternatively, the receiver and the transmitter may be integrated into a transceiver. The processing unit 2100 may be a processing apparatus.

In another implementation, the communication apparatus 2000 may be a chip or an integrated circuit installed in the network device. In this implementation, the sending unit 2200 and the receiving unit 2300 may be communication interfaces or interface circuits. For example, the sending unit 2200 is an output interface or an output circuit, the receiving unit 2300 is an input interface or an input circuit, and the processing unit 2100 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 2000 performs an operation and/or processing performed by the network device in the method embodiments. Optionally, the processing apparatus may include only the processor, and the memory configured to store the computer program is located outside the processing apparatus. The processor is connected to the memory through a circuit/wire, to read and execute the computer program stored in the memory. For another example, the processing apparatus may be a chip or an integrated circuit.

FIG. 16 is a schematic block diagram of a communication apparatus 3000 according to this application. As shown in FIG. 16, the communication apparatus 3000 includes a sending unit 3100.

The sending unit 3100 is configured to send a first UE route selection policy URSP to a terminal device, where the first URSP includes at least one first URSP rule, the first URSP rule corresponds to a home public land mobile network HPLMN or a visited public land mobile network VPLMN of the terminal device, and the first URSP is used to determine whether a first application is capable of associating with an existing session.

Optionally, in another embodiment, the first URSP rule includes a PLMN descriptor, and the PLMN descriptor indicates information about a PLMN corresponding to the first URSP rule.

Optionally, the communication apparatus 3000 further includes a receiving unit 3200 and a processing unit 3300, where the receiving unit 3200 is configured to perform a receiving action, and the processing unit 3300 is configured to perform an internal processing action.

In some other solutions, the units of the communication apparatus 3000 are further configured to perform the following steps and/or operations.

The sending unit 3100 is configured to send first indication information to a terminal device, where the first indication information indicates that when the terminal device accesses a home public land mobile network HPLMN, a first parameter combination and a second parameter combination that are included in a first UE route selection policy URSP of the terminal device are considered as a same parameter combination, the first URSP includes a first URSP rule and a second URSP rule, the first URSP rule includes the first parameter combination, the first parameter combination is a data network name DNN and single network slice selection assistance information S-NSSAI that are matched when the terminal device accesses a first application, the second URSP rule includes the second parameter combination, the second parameter combination is a DNN and S-NSSAI that are matched when the terminal device accesses a second application, and the first parameter combination is different from the second parameter combination.

Optionally, in an embodiment, the first application corresponds to an edge configuration server ECS, and the second application corresponds to an edge application server EAS.

In some other solutions, the units of the communication apparatus 3000 are further configured to perform the following steps and/or operations.

The sending unit 3100 is configured to send first indication information to an access and mobility management network element, where the first indication information indicates that when a terminal device accesses a home public land mobile network HPLMN, a first parameter combination and a second parameter combination that are included in a first UE route selection policy URSP of the terminal device are considered as a same parameter combination, the first URSP includes a first URSP rule and a second URSP rule, the first URSP rule includes the first parameter combination, the first parameter combination is a data network name DNN and single network slice selection assistance information S-NSSAI that are matched when the terminal device accesses a first application, the second URSP rule includes the second parameter combination, the second parameter combination is a DNN and S-NSSAI that are matched when the terminal device accesses a second application, and the first parameter combination is different from the second parameter combination.

Optionally, in an embodiment, the first application corresponds to an edge configuration server ECS, and the second application corresponds to an edge application server EAS.

In an implementation, the communication apparatus 3000 may be the policy control network element in the method embodiments corresponding to FIG. 6, FIG. 11, and FIG. 12.

In another implementation, the communication apparatus 3000 may be a chip or an integrated circuit installed in the policy control network element.

In some other solutions, the units of the communication apparatus 3000 are further configured to perform the following steps and/or operations.

The sending unit 3100 is configured to send third indication information to a network device, where the third indication information indicates the network device to send a first URSP to a terminal device, the first URSP is a UE route selection policy URSP corresponding to a serving PLMN of a terminal device, the serving PLMN is a visited public land mobile network VPLMN, and the network device is a visited policy control network element.

In some other solutions, the units of the communication apparatus 3000 are further configured to perform the following steps and/or operations.

The receiving unit 3200 is configured to receive second information from a network device, where the second information includes an identifier of a serving public land mobile network PLMN of a terminal device and a first request message, the first request message is used to request a home policy control network element to send a first UE route selection policy URSP to the network device, the first URSP is a URSP corresponding to the serving PLMN of the terminal device, the serving PLMN is a visited public land mobile network VPLMN, and the network device is an edge configuration server ECS.

The home policy control network element determines the first URSP based on the identifier of the serving PLMN.

The home policy control network element sends the first URSP to the network device.

Optionally, the receiving unit 1200 and a sending unit 1300 may alternatively be integrated into a transceiver unit, and the transceiver unit has both a receiving function and a sending function. This is not limited herein.

In an implementation, the communication apparatus 3000 may be the home policy control network element in the method embodiments corresponding to FIG. 9 and FIG. 10.

In another implementation, the communication apparatus 3000 may be a chip or an integrated circuit installed in the home policy control network element.

In some other solutions, the units of the communication apparatus 3000 are further configured to perform the following steps and/or operations.

The receiving unit 3200 is configured to receive first indication information from a policy control network element, where the first indication information indicates that when a terminal device accesses a home public land mobile network HPLMN, a first parameter combination and a second parameter combination that are included in a first UE route selection policy URSP of the terminal device are considered as a same parameter combination, the first URSP includes a first URSP rule and a second URSP rule, the first URSP rule includes the first parameter combination, the first parameter combination is a data network name DNN and single network slice selection assistance information S-NSSAI that are matched when the terminal device accesses a first application, the second URSP rule includes the second parameter combination, the second parameter combination is a DNN and S-NSSAI that are matched when the terminal device accesses a second application, and the first parameter combination is different from the second parameter combination. The receiving unit 3200 is further configured to receive a request message from the terminal device, where the request message includes the second parameter combination, and the request message is used to request to establish a session corresponding to the second parameter combination. The processing unit 3300 is configured to determine that the terminal device accesses the HPLMN and that a first session exists in existing sessions associated with the terminal device, where the first session is a session associated with the first parameter combination, and reject the request message of the terminal device based on the first indication information. The sending unit 3100 is configured to send a first cause value to the terminal device, where the first cause value indicates the terminal device to reuse the first existing session.

Optionally, in an embodiment, the first cause value includes second indication information, and the second indication information indicates that when the terminal device accesses the HPLMN, the first parameter combination and the second parameter combination are considered as a same parameter combination.

Optionally, in another embodiment, the first cause value includes a first session identifier, and the first session identifier indicates the terminal device to reuse the first session.

Optionally, in another embodiment, the first application corresponds to an edge configuration server ECS, and the second application corresponds to an edge application server EAS.

In some other solutions, the units of the communication apparatus 3000 are further configured to perform the following steps and/or operations.

The receiving unit 3200 is configured to receive a request message from a terminal device, where the request message includes a second parameter combination and second indication information, the second parameter combination includes a second data network name DNN and second single network slice selection assistance information S-NSSAI, and the second indication information indicates to establish a local breakout LBO session corresponding to the second parameter combination. The processing unit 3300 is configured to determine, based on subscription data of the terminal device, that the second parameter combination does not support LBO session establishment. The processing unit 3300 is further configured to determine a third parameter combination, where the third parameter combination includes a third DNN and third S-NSSAI, and the third parameter combination is a parameter combination that supports the LBO session establishment. The processing unit 3300 is further configured to establish an LBO session corresponding to the third parameter combination.

In an implementation, the communication apparatus 3000 may be the access and mobility management network element in the method embodiments corresponding to FIG. 12 and FIG. 13.

In another implementation, the communication apparatus 3000 may be a chip or an integrated circuit installed in the access and mobility management network element.

In some other solutions, the units of the communication apparatus 3000 are further configured to perform the following steps and/or operations.

The sending unit 3100 is configured to send first indication information to a terminal device, where the first indication information indicates the terminal device to use a local breakout LBO session to access a second application when accessing a visited public land mobile network VPLMN.

Optionally, in an embodiment, the second application corresponds to an edge application server EAS.

In an implementation, the communication apparatus 3000 may be the visited policy control network element in the method embodiments corresponding to FIG. 13. In this implementation, the sending unit 3100 may be a transmitter, and a receiving unit 3200 may be a receiver. Alternatively, the receiver and the transmitter may be integrated into a transceiver. The processing unit 3300 may be a processing apparatus.

In another implementation, the communication apparatus 3000 may be a chip or an integrated circuit installed in the visited policy control network element. In this implementation, the sending unit 3100 and the receiving unit 3200 may be communication interfaces or interface circuits. For example, the sending unit 3100 is an output interface or an output circuit, the receiving unit 3200 is an input interface or an input circuit, and the processing unit 3300 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 3000 performs operations and/or processing performed by the terminal device in the method embodiments. Optionally, the processing apparatus may include only the processor, and the memory configured to store the computer program is located outside the processing apparatus. The processor is connected to the memory through a circuit/wire, to read and execute the computer program stored in the memory. For another example, the processing apparatus may be a chip or an integrated circuit.

FIG. 17 is a schematic diagram of a structure of a communication apparatus 10 according to this application. As shown in FIG. 17, the communication apparatus 10 includes one or more processors 11, one or more memories 12, and one or more communication interfaces 13. The processor 11 is configured to control the communication interface 13 to receive and send a signal. The memory 12 is configured to store a computer program. The processor 11 is configured to invoke the computer program from the memory 12 and run the computer program, so that processes and/or operations performed by the terminal device in the method embodiments of this application are performed.

For example, the processor 11 may have functions of the processing unit 1100 shown in FIG. 14, and the communication interface 13 may have functions of the sending unit 1300 and/or the receiving unit 1200 shown in FIG. 14. Specifically, the processor 11 may be configured to perform processing or operations performed inside the terminal device in the method embodiments of this application, and the communication interface 13 is configured to perform sending and/or receiving actions performed by the terminal device in the method embodiments corresponding to FIG. 6 to FIG. 13 of this application.

In an implementation, the communication apparatus 10 may be the terminal device in the method embodiments corresponding to FIG. 6 to FIG. 13 of this application. In this implementation, the communication interface 13 may be a transceiver. The transceiver may include a receiver and a transmitter.

Optionally, the processor 11 may be a baseband apparatus, and the communication interface 13 may be a radio frequency apparatus.

In another implementation, the communication apparatus 10 may be a chip installed in the terminal device. In this implementation, the communication interface 13 may be an interface circuit or an input/output interface.

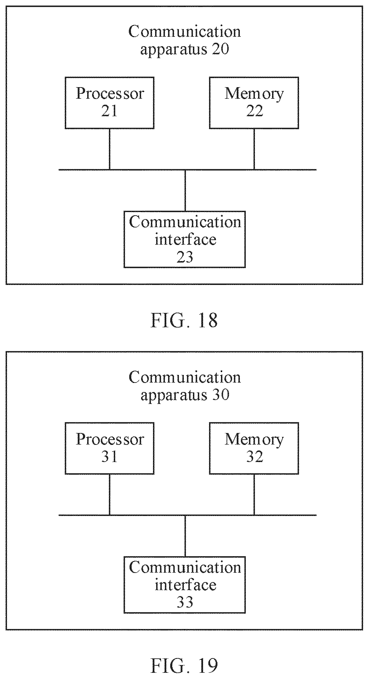

FIG. 18 is a schematic diagram of a structure of a communication apparatus 20 according to this application. As shown in FIG. 18, the communication apparatus 20 includes one or more processors 21, one or more memories 22, and one or more communication interfaces 23. The processor 21 is configured to control the communication interface 23 to receive and send a signal. The memory 22 is configured to store a computer program. The processor 21 is configured to invoke the computer program from the memory 22 and run the computer program, so that processes and/or operations performed by a network device in the method embodiments of this application are performed.

For example, the processor 21 may have functions of the processing unit 2100 shown in FIG. 15, and the communication interface 23 may have functions of the sending unit 2200 and/or the receiving unit 2300 shown in FIG. 15. Specifically, the processor 21 may be configured to perform processing or operations performed inside the network device in the method embodiments corresponding to FIG. 7 to FIG. 10 of this application, and the communication interface 23 is configured to perform sending and/or receiving actions performed by the network device in the method embodiments corresponding to FIG. 7 to FIG. 10 of this application. Details are not described again.

In an implementation, the communication apparatus 20 may be the network device in the method embodiments corresponding to FIG. 7 to FIG. 10 of this application. In this implementation, the communication interface 13 may be a transceiver. The transceiver may include a receiver and a transmitter.

Optionally, the processor 21 may be a baseband apparatus, and the communication interface 23 may be a radio frequency apparatus.

In another implementation, the communication apparatus 20 may be a chip installed in the network device. In this implementation, the communication interface 23 may be an interface circuit or an input/output interface.

FIG. 19 is a schematic diagram of a structure of a communication apparatus 30 according to this application. As shown in FIG. 19, the communication apparatus 30 includes one or more processors 31, one or more memories 32, and one or more communication interfaces 33. The processor 31 is configured to control the communication interface 33 to receive and send a signal. The memory 32 is configured to store a computer program. The processor 31 is configured to invoke the computer program from the memory 32 and run the computer program, so that processes and/or operations performed by a policy control network element, a home policy control network element, a visited policy control network element, and an access and mobility management network element in the method embodiments of this application are performed.

For example, the processor 31 may have functions of the processing unit 3100 shown in FIG. 16, and the communication interface 33 may have functions of the sending unit 3100 and/or the receiving unit 3200 shown in FIG. 16. Specifically, the processor 31 may be configured to perform processing or operations performed inside the policy control network element, the home policy control network element, the visited policy control network element, and the access and mobility management network element in the method embodiments of this application. The communication interface 33 is configured to perform sending and/or receiving actions performed by the policy control network element, the home policy control network element, the visited policy control network element, and the access and mobility management network element in the method embodiments of this application. Details are not described again.

In an implementation, the communication apparatus 30 may be any one of the following network elements: the policy control network element, the home policy control network element, the visited policy control network element, or the access and mobility management network element in the method embodiments. In this implementation, the communication interface 13 may be a transceiver. The transceiver may include a receiver and a transmitter.

Optionally, the processor 31 may be a baseband apparatus, and the communication interface 33 may be a radio frequency apparatus.

In another implementation, the communication apparatus 30 may be a chip installed in any one of the following network elements: the policy control network element, the home policy control network element, the visited policy control network element, or the access and mobility management network element. In this implementation, the communication interface 33 may be an interface circuit or an input/output interface.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely division by logical function and there may be other division manners in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for enabling a computer device (such as a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by a terminal device, a first UE route selection policy URSP, wherein the first URSP comprises at least one first URSP rule, the first URSP rule corresponds to a home public land mobile network HPLMN or a visited public land mobile network VPLMN of the terminal device, and the first URSP is used to determine whether a first application is capable of associating with an existing session;
starting, by the terminal device, the first application;
determining, by the terminal device, one of the at least one first URSP rule as a second URSP rule based on a serving PLMN and the first application, wherein a PLMN corresponding to the second URSP rule is the same as the serving PLMN; and
determining, by the terminal device according to the second URSP rule, to use the existing session or a newly established session to transmit a service of the first application.

2. The method according to claim 1, wherein the first URSP rule comprises a PLMN descriptor, and the PLMN descriptor indicates information about a PLMN corresponding to the first URSP rule.

3. The method according to claim 1 or 2, wherein the determining, by a terminal device, a first URSP comprises:
receiving, by the terminal device, the first URSP from a policy control network element; or
configuring, by the terminal device, the first URSP locally.

4. A communication method, comprising:
sending, by a policy control network element, a first UE route selection policy URSP to a terminal device, wherein the first URSP comprises at least one first URSP rule, the first URSP rule corresponds to a home public land mobile network HPLMN or a visited public land mobile network VPLMN of the terminal device, and the first URSP is used to determine whether a first application is capable of associating with an existing session.

5. The method according to claim 4, wherein the first URSP rule comprises a PLMN descriptor, and the PLMN descriptor indicates information about a PLMN corresponding to the first URSP rule.

6. A communication method, comprising:
receiving, by a terminal device, a first UE route selection policy URSP from a network device, wherein the first URSP comprises at least one URSP rule, the first URSP is a URSP corresponding to a serving public land mobile network PLMN of the terminal device, the serving PLMN is a visited public land mobile network VPLMN, and the first URSP is used to determine whether a first application is capable of associating with an existing session;
starting, by the terminal device, the first application;
determining, by the terminal device, one of the at least one URSP rule as a first URSP rule based on the serving PLMN and the first application; and
determining, by the terminal device according to the first URSP rule, to use the existing session or a newly established session to transmit a service of the first application.

7. The method according to claim 6, wherein the method further comprises:
receiving, by the terminal device, first indication information from the network device, wherein the first indication information indicates that the first URSP corresponds to the VPLMN.

8. The method according to claim 6 or 7, wherein the network device is any one of a home policy control network element, a visited policy control network element, or an edge configuration server ECS.

9. The method according to claim 6 or 7, wherein the network device is an ECS, and before the receiving, by a terminal device, a first URSP from a network device, the method further comprises:
sending, by the terminal device, an identifier of the serving PLMN and first information to the network device, wherein the first information comprises an identifier of an HPLMN of the terminal device and/or second indication information, and the second indication information indicates that the terminal device is in a roaming state.

10. A communication method, comprising:
determining, by a network device, a first UE route selection policy URSP, wherein the first URSP comprises at least one URSP rule, the first URSP is a URSP corresponding to a serving public land mobile network PLMN of a terminal device, the serving PLMN is a visited public land mobile network VPLMN, and the first URSP is used to determine whether a first application is capable of associating with an existing session; and
sending, by the network device, the first URSP to the terminal device.

11. The method according to claim 10, wherein the method further comprises:
sending, by the network device, first indication information to the terminal device, wherein the first indication information indicates that the first URSP corresponds to the VPLMN.

12. The method according to claim 10 or 11, wherein the network device is an edge configuration server ECS, and before the sending, by the network device, the first URSP to the terminal device, the method further comprises:
receiving, by the network device, an identifier of the serving PLMN and first information from the terminal device, wherein the first information comprises an identifier of a home public land mobile network HPLMN of the terminal device and/or second indication information, and the second indication information indicates that the terminal device is in a roaming state; and
determining, by the network device based on the identifier of the serving PLMN and the identifier of the HPLMN, that the terminal device is in the roaming state, or determining, based on the second indication information, that the terminal device is in the roaming state.

13. The method according to claim 12, wherein the determining, by a network device, a first URSP comprises:
sending, by the network device, second information to a home policy control network element, wherein the second information comprises the identifier of the serving PLMN and a first request message, and the first request message is used to request the home policy control network element to send the first URSP to the network device; and
receiving, by the network device, the first URSP from the home policy control network element.

14. The method according to claim 10 or 11, wherein the network device is a visited policy control network element, and the determining, by a network device, a first URSP comprises:
receiving, by the network device, third indication information from a home policy control network element, wherein the third indication information indicates the network device to send the first URSP to the terminal device; and
determining, by the network device, the first URSP based on the third indication information.

15. The method according to claim 10 or 11, wherein the network device is a home policy control network element.

16. A communication method, comprising:
sending, by a home policy control network element, third indication information to a network device, wherein the third indication information indicates the network device to send a first URSP to a terminal device, the first URSP is a UE route selection policy URSP corresponding to a serving PLMN of the terminal device, the serving PLMN is a visited public land mobile network VPLMN, and the network device is a visited policy control network element.

17. A communication method, comprising:
receiving, by a home policy control network element, second information from a network device, wherein the second information comprises an identifier of a serving public land mobile network PLMN of a terminal device and a first request message, the first request message is used to request the home policy control network element to send a first UE route selection policy URSP to the network device, the first URSP is a URSP corresponding to the serving PLMN of the terminal device, the serving PLMN is a visited public land mobile network VPLMN, and the network device is an edge configuration server ECS;
determining, by the home policy control network element, the first URSP based on the identifier of the serving PLMN; and
sending, by the home policy control network element, the first URSP to the network device.

18. A communication method, comprising:
determining, by a terminal device, a first UE route selection policy URSP, wherein the first URSP comprises a first URSP rule and a second URSP rule, the first URSP rule comprises a first parameter combination, the first parameter combination is a data network name DNN and single network slice selection assistance information S-NSSAIthat are matched when the terminal device accesses a first application, the second URSP rule comprises a second parameter combination, the second parameter combination is a DNN and S-NSSAI that are matched when the terminal device accesses a second application, and the first parameter combination is different from the second parameter combination;
receiving, by the terminal device, first indication information from a policy control network element, wherein the first indication information indicates that when a serving public land mobile network PLMN of the terminal device is a home public land mobile network HPLMN, the first parameter combination and the second parameter combination are considered as a same parameter combination;
starting, by the terminal device, the first application;
determining, by the terminal device according to the first URSP rule, to use a first session to transmit a service of the first application, wherein the first session corresponds to the first parameter combination;
starting, by the terminal device, the second application;
determining, by the terminal device, that the serving PLMN of the terminal device is the HPLMN;
determining, by the terminal device according to the second URSP rule and the first indication information, that the terminal device is successfully matched with the first session; and
reusing, by the terminal device, the first session to transmit a service of the second application.

19. The method according to claim 18, wherein the first application corresponds to an edge configuration server ECS, and the second application corresponds to an edge application server EAS.

20. A communication method, comprising:
sending, by a policy control network element, first indication information to a terminal device, wherein the first indication information indicates that when the terminal device accesses a home public land mobile network HPLMN, a first parameter combination and a second parameter combination that are comprised in a first UE route selection policy URSP of the terminal device are considered as a same parameter combination, the first URSP comprises a first URSP rule and a second URSP rule, the first URSP rule comprises the first parameter combination, the first parameter combination is a data network name DNN and single network slice selection assistance information S-NSSAI that are matched when the terminal device accesses a first application, the second URSP rule comprises the second parameter combination, the second parameter combination is a DNN and S-NSSAI that are matched when the terminal device accesses a second application, and the first parameter combination is different from the second parameter combination.

21. The method according to claim 20, wherein the first application corresponds to an edge configuration server ECS, and the second application corresponds to an edge application server EAS.

22. A communication method, comprising:
receiving, by an access and mobility management network element, first indication information from a policy control network element, wherein the first indication information indicates that when a terminal device accesses a home public land mobile network HPLMN, a first parameter combination and a second parameter combination that are comprised in a first UE route selection policy URSP of the terminal device are considered as a same parameter combination, the first URSP comprises a first URSP rule and a second URSP rule, the first URSP rule comprises the first parameter combination, the first parameter combination is a data network name DNN and single network slice selection assistance information S-NSSAI that are matched when the terminal device accesses a first application, the second URSP rule comprises the second parameter combination, the second parameter combination is a DNN and S-NSSAI that are matched when the terminal device accesses a second application, and the first parameter combination is different from the second parameter combination;
receiving, by the access and mobility management network element, a request message from the terminal device, wherein the request message comprises the second parameter combination, and the request message is used to request to establish a session corresponding to the second parameter combination;
determining, by the access and mobility management network element, that the terminal device accesses the HPLMN and that a first session exists in existing sessions associated with the terminal device, wherein the first session is a session associated with the first parameter combination; and
rejecting, by the access and mobility management network element, the request message of the terminal device based on the first indication information, and sending a first cause value to the terminal device, wherein the first cause value indicates the terminal device to reuse the first existing session.

23. The method according to claim 22, wherein the first cause value comprises second indication information, and the second indication information indicates that when the terminal device accesses the HPLMN, the first parameter combination and the second parameter combination are considered as the same parameter combination.

24. The method according to claim 22 or 23, wherein the first cause value comprises a first session identifier, and the first session identifier indicates the terminal device to reuse the first session.

25. The method according to any one of claims 22 to 24, wherein the first application corresponds to an edge configuration server ECS, and the second application corresponds to an edge application server EAS.

26. A communication method, comprising:
sending, by a policy control network element, first indication information to an access and mobility management network element, wherein the first indication information indicates that when a terminal device accesses a home public land mobile network HPLMN, a first parameter combination and a second parameter combination that are comprised in a first UE route selection policy URSP of the terminal device are considered as a same parameter combination, the first URSP comprises a first URSP rule and a second URSP rule, the first URSP rule comprises the first parameter combination, the first parameter combination is a data network name DNN and single network slice selection assistance information S-NSSAI that are matched when the terminal device accesses a first application, the second URSP rule comprises the second parameter combination, the second parameter combination is a DNN and S-NSSAI that are matched when the terminal device accesses a second application, and the first parameter combination is different from the second parameter combination.

27. The method according to claim 26, wherein the first application corresponds to an edge configuration server ECS, and the second application corresponds to an edge application server EAS.

28. A communication method, comprising:
determining, by a terminal device, a first UE route selection policy URSP, wherein the first URSP comprises a first URSP rule and a second URSP rule, the first URSP rule comprises a first parameter combination, the first parameter combination is a data network name DNN and single network slice selection assistance information S-NSSAI that are matched when the terminal device accesses a first application, the second URSP rule comprises a second parameter combination, the second parameter combination is a DNN and S-NSSAI that are matched when the terminal device accesses a second application, and the first parameter combination is different from the second parameter combination;
starting, by the terminal device, the first application;
determining, by the terminal device according to the first URSP rule, to use a first session to transmit a service of the first application, wherein the first session corresponds to the first parameter combination;
accessing, by the terminal device, a home public land mobile network HPLMN;
starting, by the terminal device, the second application;
sending, by the terminal device, a request message to an access and mobility management network element, wherein the request message comprises the second parameter combination, and the request message is used to request to establish a session corresponding to the second parameter combination;
receiving, by the terminal device, a first cause value from the access and mobility management network element, wherein the first cause value indicates the terminal device to reuse the first session; and
reusing, by the terminal device based on the first cause value, the first session to transmit a service of the second application.

29. The method according to claim 28, wherein the first cause value comprises second indication information, and the second indication information indicates that when the terminal device accesses the HPLMN, the first parameter combination and the second parameter combination are considered as a same parameter combination.

30. The method according to claim 28 or 29, wherein the first cause value comprises a first session identifier, and the first session identifier indicates the terminal device to reuse the first session.

31. The method according to any one of claims 28 to 30, wherein the first application corresponds to an edge configuration server ECS, and the second application corresponds to an edge application server EAS.

32. A communication method, comprising:
determining, by a terminal device, a first UE route selection policy URSP, wherein the first URSP comprises a first URSP rule and a second URSP rule, the first URSP rule comprises a first parameter combination, the first parameter combination is a data network name DNN and single network slice selection assistance information S-NSSAI that are matched when the terminal device accesses a first application, the second URSP rule comprises a second parameter combination, the second parameter combination is a DNN and S-NSSAI that are matched when the terminal device accesses a second application, the first parameter combination and the second parameter combination are the same, and subscription data of the first parameter combination and the second parameter combination indicates the terminal device to use a home routed HR session to access the first application or the second application when accessing a visited public land mobile network VPLMN;
receiving, by the terminal device, first indication information from a visited policy control network element, wherein the first indication information indicates the terminal device to use a local breakout LBO session to access the second application when the terminal device is located in the VPLMN;
accessing, by the terminal device, the VPLMN;
starting, by the terminal device, the second application; and
determining, by the terminal device according to the second URSP rule and the first indication information, to use a first session to transmit a service of the second application, wherein the first session is associated with an LBO session of a third parameter combination, and the third parameter combination comprises a third DNN and third S-NSSAI.

33. The method according to claim 32, wherein before the determining, by the terminal device, to use a first session to transmit a service of the second application, the method further comprises:
sending, by the terminal device, a request message to an access and mobility management network element, wherein the request message comprises the second parameter combination and second indication information, and the second indication information indicates to establish an LBO session corresponding to the second parameter combination.

34. The method according to claim 32 or 33, wherein the first application corresponds to an edge configuration server ECS, and the second application corresponds to an edge application server EAS.

35. A communication method, comprising:
sending, by a visited policy control network element, first indication information to a terminal device, wherein the first indication information indicates the terminal device to use a local breakout LBO session to access a second application when accessing a visited public land mobile network VPLMN.

36. The method according to claim 35, wherein the second application corresponds to an edge application server EAS.

37. A communication method, comprising:
receiving, by an access and mobility management network element, a request message from a terminal device, wherein the request message comprises a second parameter combination and second indication information, the second parameter combination comprises a second data network name DNN and second single network slice selection assistance information S-NSSAI, and the second indication information indicates to establish a local breakout LBO session corresponding to the second parameter combination;
determining, by the access and mobility management network element based on subscription data of the terminal device, that the second parameter combination does not support LBO session establishment;
determining, by the access and mobility management network element, a third parameter combination, wherein the third parameter combination comprises a third DNN and third S-NSSAI, and the third parameter combination is a parameter combination that supports the LBO session establishment; and
establishing, by the access and mobility management network element, an LBO session corresponding to the third parameter combination.

38. A communication apparatus, comprising a unit configured to implement the method according to any one of claims 1 to 37.

39. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 37.

40. A computer-readable storage medium, wherein the computer-readable storage medium stores computer instructions, and when the computer instructions are run on a computer, the method according to any one of claims 1 to 37 is performed.

41. A computer program product, wherein the computer program product comprises computer program code, and when the computer program code is run on a computer, the method according to any one of claims 1 to 37 is performed.
